# EUROPEAN PATENT APPLICATION

(11) **EP 4 387 162 A1**
(43) Date of publication of application: **19.06.2024**
(21) Application number: 22862924.2
(22) Date of filing: 19.07.2022
(51) Int. Cl.: H04L 9/18

(54) **DATA TRANSMISSION METHOD AND DEVICE, READABLE STORAGE MEDIUM, AND CHIP SYSTEM**

(30) Priority: 03.09.2021 CN 202111034376
(71) Applicant: Huawei Technologies Co., Ltd., Shenzhen, Guangdong 518129 (CN)
(72) Inventor: DING, Li, Shenzhen, Guangdong 518129 (CN); SUN, Desheng, Shenzhen, Guangdong 518129 (CN); BI, Hongjun, Shenzhen, Guangdong 518129 (CN)
(74) Representative: Thun, Clemens
(86) International application number: PCT/CN2022/106421
(87) International publication number: WO 2023/029783

(57) **Abstract**

A data transmission method, a device, a readable storage medium, and a chip system are provided. In this application, a first communication apparatus obtains a first ciphertext data stream, and sends the first ciphertext data stream. The first ciphertext data stream includes a first alignment marker AM and an encrypted first data segment. At least one of some bits in a first AM lock information field in the first AM, some bits in a first lane identification information field in the first AM, or some or all bits in a first check information field in the first AM is used to carry encryption parameter information of the first data segment. In this application, transmission of the encryption parameter information is performed in the foregoing bit locations in the first AM in the data stream. The method is used at a physical layer of an optical module or a network device, and a sent encryption parameter does not occupy a user service bandwidth.

## Description

### CROSS-REFERENCE TO RELATED APPLICATIONS

This application claims priority to Chinese Patent Application No. 202111034376.0, filed with the China National Intellectual Property Administration on September 3, 2021 and entitled "DATA TRANSMISSION METHOD, DEVICE, READABLE STORAGE MEDIUM, AND CHIP SYSTEM", which is incorporated herein by reference in its entirety.

### TECHNICAL FIELD

This application relates to the communication field, and in particular, to a data transmission method, a device, a readable storage medium, and a chip system.

### BACKGROUND

Private line services, such as financial services, need to be carried securely. Security is an important factor considered when customers select the private line services. Encryption is an important means to ensure data security and can effectively prevent private information from being stolen by attackers. According to different layers of encryption in an open system interconnection reference model (Open System Interconnection Reference Model, OSI), encryption can be classified into a layer 2 encryption MAC security (media access control security, MACsec) protocol, and the like. A standard advanced encryption standard-Galois/counter mode (Advanced Encryption Standard-Galois/Counter Mode, AES-GCM) algorithm is usually used as an encryption algorithm.

However, a layer for implementing an existing encryption technology based on the MACsec protocol and the like is on a MAC layer, and each user frame is an object of encryption and decryption. In a method for encrypting each user frame at the MAC layer by using the encryption technology based on the MACsec protocol, an encryption parameter needs to be carried in the user frame. The encryption parameter occupies a large amount of user service bandwidth, and costs are high.

### SUMMARY

To resolve the foregoing problems, this application provides a data transmission method, a device, a readable storage medium, and a chip system, so that an encryption parameter does not occupy a user service bandwidth.

According to a first aspect, this application provides a data transmission method. The method may be performed by a device at a transmitting end, for example, may be performed by a first communication apparatus. The first communication apparatus obtains a first ciphertext data stream, and sends the first ciphertext data stream. The first ciphertext data stream includes a first AM and an encrypted first data segment. The first AM is used for data alignment of the first ciphertext data stream. The first AM includes at least one of a first AM lock information field, a first lane identification information field, or a first check information field. At least one of some bits in the first AM lock information field, some bits in the first lane identification information field, or some or all bits in the first check information field is used to carry encryption parameter information of the first data segment.

In this application, transmission of the encryption parameter information is performed in the bit locations in the first AM in the data stream. The method is used at a physical layer of an optical module or a network device, and a sent encryption parameter does not occupy a user service bandwidth. In addition, in the solution, a bit stream at a physical layer is encrypted, and all bits (including a source MAC address and a destination MAC address) in a user frame are encrypted. This can improve security.

In a possible implementation, the first communication apparatus may obtain N ciphertext data streams, where N may be 1, or N may be an integer greater than 1, and the first ciphertext data stream is one of the N ciphertext data streams. Correspondingly, the first communication apparatus may send the N ciphertext data streams.

In a possible implementation, the first ciphertext data stream includes at least two first AMs and at least two encrypted first data segments. One encrypted first data segment is included between every two first AMs, and one first AM is included between every two encrypted first data segments. In other words, in embodiments of this application, the first AM may periodically appear in the first ciphertext data stream. Similarly, it may be understood that the encrypted first data segment also periodically appears in the first ciphertext data stream. Alternatively, it may be understood that each AM periodicity includes one first AM and one encrypted first data segment.

In a possible implementation, if the first AM lock information field carries the encryption parameter information, some bits in the first AM lock information field are used to carry the encryption parameter information, and the other bits are used to carry AM lock information of the first ciphertext data stream. It can be learned that, in embodiments of this application, the encryption parameter information can occupy bit locations originally used to carry the AM lock information to carry the encryption parameter information. This provides a specific implementation for transmission of the encryption parameter in the first AM. Further, a receiving end can perform AM lock in cooperation with a matching rule provided in this application, so that AM lock performance is not affected as much as possible.

In a possible implementation, if the first lane identification information field carries the encryption parameter information, some bits in the first lane identification information field are used to carry the encryption parameter information, and the other bits are used to carry lane identification information of the first ciphertext data stream. It can be learned that, in embodiments of this application, the encryption parameter information can occupy bit locations originally used to carry the lane identification information to carry the encryption parameter information. This provides a specific implementation for transmission of the encryption parameter in the first AM.

In a possible implementation, if the first check information field carries the encryption parameter information, some bits in the first check information field are used to carry the encryption parameter information, and the other bits are used to carry check information. It can be learned that, in embodiments of this application, the encryption parameter information can occupy bit locations originally used to carry the check information to carry the encryption parameter information. This provides a specific implementation for transmission of the encryption parameter in the first AM.

In a possible implementation, the first ciphertext data stream is obtained based on a first plaintext data stream and the encryption parameter information. The first plaintext data stream includes a second AM and the unencrypted first data segment. The second AM is used for data alignment of the first plaintext data stream.

In a possible implementation, second AM lock information field may be used to carry AM lock information of the first plaintext data stream. Second lane identification information field may be used to carry lane identification information of the first plaintext data stream. Second check information field may be used to carry check information.

In a possible implementation, if the first AM lock information field is not used to carry the encryption parameter information, information carried in the second AM lock information field may be the same as information carried in the first AM lock information field.

If the first AM lock information field carries the encryption parameter information, the first AM lock information field includes first information and the encryption parameter information, and the second AM lock information field includes second information. Bit values corresponding to the second information in the second AM lock information field may be divided into two parts, which may be referred to as a first part of bit values and a second part of bit values. The first part of bit values is the same as bit values corresponding to the first information, and bit locations of the first part of bit values in the second AM lock information field are correspondingly the same as bit locations corresponding to the first information in the first AM lock information field. Bit locations of the second part of bit values in the second AM lock information field are correspondingly the same as bit locations corresponding to the encryption parameter information in the first AM lock information field, but the second part of bit values are different from bit values corresponding to the encryption parameter information in the first check field.

In another possible implementation, if the first AM lock information field carries the encryption parameter information, the first AM lock information field may be obtained by replacing some bits in the second AM lock information field with a part or all of the encryption parameter information. For example, it may be understood that the first communication apparatus obtains the first AM lock information field after updating the second part of bit values in the second AM lock information field to the encryption parameter information.

In this way, the first AM lock information field in the first AM can be obtained by replacing a part of content in the second AM lock information field in the second AM in the plaintext data stream. In addition, because content carried in the first AM lock information field is protocol values, the receiving end can restore the bit locations in the first AM lock information field that carry the encryption parameter to the values corresponding to the AM lock information of the second AM lock information field. This can reduce impact of transmission of the encryption parameter information on another data processing process as much as possible.

In a possible implementation, if the first check information field is not used to carry the encryption parameter information, information carried in the second check information field may be the same as information carried in the first check information field.

If the first check information field carries the encryption parameter information, the first check information field includes third information and the encryption parameter information, and the second check information field includes fourth information. Bit values corresponding to the fourth information in the second check information field may be divided into two parts, which may be referred to as a third part of bit values and a fourth part of bit values. The third part of bit values is the same as bit values corresponding to the third information, and bit locations of the third part of bit values in the second check information field are correspondingly the same as bit locations corresponding to the third information in the first check information field. Bit locations of the fourth part of bit values in the second check information field are correspondingly the same as bit locations corresponding to the encryption parameter information in the first check information field, but the fourth part of bit values are different from bit values corresponding to the encryption parameter information in the first check information field.

In another possible implementation, if the first check information field carries the encryption parameter information, the first check information field may be obtained by replacing some bits in the second check information field with a part or all of the encryption parameter information. For example, it may be understood that the first communication apparatus obtains the first check information field after updating the fourth part of bit values in the second check information field to the encryption parameter information.

In this way, the first check information field in the first AM can be obtained by replacing a part of content in the second check information field in the second AM in the plaintext data stream. This can provide a specific implementation for transmission of the encryption parameter information in the first AM.

In a possible implementation, if the first lane identification information field is not used to carry the encryption parameter information, information carried in the second lane identification information field may be the same as information carried in the first lane identification information field.

If the first lane identification information field carries the encryption parameter information, the first lane identification information field includes fifth information and the encryption parameter information, and the second lane identification information field includes sixth information. Bit values corresponding to the sixth information in the second lane identification information field may be divided into two parts, which may be referred to as a fifth part of bit values and a sixth part of bit values. The fifth part of bit values is the same as bit values corresponding to the fifth information, and bit locations of the fifth part of bit value in the second lane identification information field are correspondingly the same as bit locations corresponding to the fifth information in the first lane identification information field. Bit locations of the sixth part of bit values in the second lane identification information field are correspondingly the same as bit locations corresponding to the encryption parameter information in the first lane identification information field, but the sixth part of bit values are different from bit values corresponding to the encryption parameter information in the first lane identification information field.

In another possible implementation, if the first lane identification information field carries the encryption parameter information, the first lane identification information field may be obtained by replacing some bits in the second lane identification information field with a part or all of the encryption parameter information. For example, it may be understood that the first communication apparatus obtains the first lane identification information field after updating the sixth part of bit values in the second lane identification information field to the encryption parameter information.

In this way, the first lane identification information field in the first AM can be obtained by replacing a part of content in the second lane identification information field in the second AM in the plaintext data stream. This can provide a specific implementation for transmission of the encryption parameter information in the first AM.

In a possible implementation, bit locations in the first lane identification information field that are used to carry the encryption parameter information are some or all bit locations of k1 bit locations in the second lane identification information field that carry first preset values, and k1 is a positive integer. In this way, the receiving end can restore the bit locations in the first lane identification information field that carry the encryption parameter to corresponding preset values in the second lane identification information field. This can reduce impact of transmission of the encryption parameter information on another data processing process as much as possible.

In a possible implementation, before the first communication apparatus sends the first ciphertext data stream, the first communication apparatus may further obtain N plaintext data streams. The N plaintext data streams include the first plaintext data stream and a second plaintext data stream. The second plaintext data stream includes a third AM. The third AM includes a third lane identification information field that carries lane identification information of the second plaintext data stream, and the third lane identification information field includes k1 bit locations that carry the first preset values. It can be learned that two different lane identification information fields in two different plaintext data streams each include the preset values of the k1 bit locations. In this way, the k1 bit locations in each plaintext data stream that carry the first preset value can be used to carry the encryption parameter information.

In a possible implementation, for one of the k1 bit locations that carry the first preset values, a value carried by the bit location in the third lane identification information field is the same as a value carried by the bit location in the second lane identification information field. In this way, the two different lane identification information fields in the two different plaintext data streams can carry the preset value on the same k1 bit locations. The k1 bit locations in each plaintext data stream that carry the first preset value can be used to carry the encryption parameter information, and for the receiving end, because the same k1 bit locations in different lanes carry the same preset value, a process in which the receiving end restores the second AM to the first AM can be simplified.

To be more compatible with an existing standard, in a possible implementation, bit locations in the first lane identification information field that are used to carry the encryption parameter information are some or all of the following bit locations in an AM code block corresponding to the first lane identification information field: a 4^{th} bit location, a 13^{th} bit location, a 15^{th} bit location, a 20^{th} bit location, a 36^{th} bit location, a 45^{th} bit location, a 47^{th} bit location, and a 52^{nd} bit location. It should be noted that a first bit location in the AM code block corresponding to the first lane identification information field is referred to as a 0^{th} bit location.

To ensure 0/1 balance, information that is carried in the first AM and that belongs to the encryption parameter information may be divided into two parts: a first part of information and a second part of information. There is a negation relationship between a bit value corresponding to the second part of information and a bit value corresponding to the first part of information. For example, if the bit value corresponding to the second part of information is 1010, the bit value corresponding to the first part of information is 0101. The first part of information may be used as a reference, and the first part of information is negated to obtain the second part of information; or the second part of information may be used as a reference, and the second part of information is negated to obtain the first part of information. For example, it may also be understood that the second part of information is information obtained by negating the bit value corresponding to the first part of information, or it may be understood that the first part of information is information obtained by negating the bit value corresponding to the second part of information. This can also effectively resist impact of a link bit error on transmission reliability of the encryption parameter.

In a possible implementation, information that is carried in the first AM lock information field and that belongs to the encryption parameter information is divided into two parts: a third part of information and a fourth part of information. There is a negation relationship between a bit value corresponding to the third part of information and a bit value corresponding to the fourth part of information. For example, the fourth part of information is information obtained by negating the bit value corresponding to the third part of information. For another example, the third part of information is information obtained by negating the bit value corresponding to the fourth part of information. This can ensure 0/1 balance, and effectively resist impact of a link bit error on transmission reliability of the encryption parameter.

In a possible implementation, information that is carried in the first lane identification information field and that belongs to the encryption parameter information is divided into two parts: a fifth part of information and a sixth part of information. There is a negation relationship between a bit value corresponding to the fifth part of information and a bit value corresponding to the sixth part of information. For example, the fifth part of information is information obtained by negating the bit value corresponding to the sixth part of information. For another example, the sixth part of information is information obtained by negating the bit value corresponding to the fifth part of information. This can ensure 0/1 balance, and effectively resist impact of a link bit error on transmission reliability of the encryption parameter.

In a possible implementation, information that is carried in the first check information field and that belongs to the encryption parameter information is divided into two parts: a seventh part of information and an eighth part of information. There is a negation relationship between a bit value corresponding to the seventh part of information and a bit value corresponding to the eighth part of information. For example, the seventh part of information is information obtained by negating the bit value corresponding to the eighth part of information. For another example, the eighth part of information is information obtained by negating the bit value corresponding to the seventh part of information. This can ensure 0/1 balance, and effectively resist impact of a link bit error on transmission reliability of the encryption parameter.

In a possible implementation, bit locations in the first AM lock information field that are used to carry the encryption parameter information are some of bit locations of the following fields: an M0 field, an M1 field, an M2 field, a ~M0 field, a ~M1 field, and a -M2 field. The encryption parameter information may be simultaneously deployed in at least two of the M0 field, the M1 field, the M2 field, the -M0 field, the ~M1 field, and the -M2 field, for example, may be deployed in the M0 field and the M1 field.

In a possible implementation, the bit locations in the first AM lock information field that are used to carry the encryption parameter information may be bit locations of first four bits of the M0 field and first four bits of the ~M0 field. In another possible implementation, the bit locations in the first AM lock information field that are used to carry the encryption parameter information may be bit locations of first four bits of the M1 field and first four bits of the ~M1 field. In still another possible implementation, the bit locations in the first AM lock information field that are used to carry the encryption parameter information may be bit locations of first four bits of the M2 field and first four bits of the -M2 field. In this way, the receiving end can perform AM lock in cooperation with the matching rule provided in this application, which can ensure performance of locking based on the first AM lock information field.

In a possible implementation, bit locations in the first check information field that are used to carry the encryption parameter information are some or all of bit locations of the following fields: a BIP₃ field or a ~BIP₃ field. Because a value carried in a ~BIP₃ field in the plaintext data stream is a value obtained by negating a value of a BIP₃ field, the receiving end can restore the other field carrying the encryption parameter information based on one of the BIP₃ field and the ~BIP₃ field that does not carry the encryption parameter information.

In a possible implementation, the bit locations in the first check information field that are used to carry the encryption parameter information are bit locations of first four bits of the ~BIP₃ field and last four bits of the BIP₃ field. Because a value carried in a ~BIP₃ field in the plaintext data stream is a value obtained by negating a value of a BIP₃ field, the receiving end can restore, based on a value of the BIP₃ field in the first AM, a value carried in the ~BIP₃ field in the first AM to a value carried in the ~BIP₃ field in the second AM. This can minimize impact of transmission of the encryption parameter information on another data processing process.

In a possible implementation, the encryption parameter information includes an initialization vector IV and a key identification. The two parameters are two parameters in the encryption parameter information. The receiving end can determine an encryption key based on the two parameters, and then decrypt encryption data based on the encryption key.

In a possible implementation, the encryption parameter information includes error correction information of the encryption parameter information. This can effectively resist impact of a link bit error on transmission reliability of the encryption parameter.

The error correction information of the encryption parameter information may be a Reed-Solomon error correction code-forward error correction (Reed-Solomon forward error correction, RS-FEC) code. The RS-FEC code has good performance in handling burst bit errors. The error correction information of the encryption parameter information may also be a BCH code, and the BCH code is obtained from abbreviations of Bose, Ray-Chaudhuri, and Hocquenghem.

In a possible implementation, the encryption parameter information further includes multiframe start identification information, and the multiframe start identification information indicates a start bit of a multiframe that carries the encryption parameter information. In this way, the receiving end can identify the start bit of the multiframe corresponding to the encryption parameter information.

In a possible implementation, the encryption parameter information further includes multiframe lock status identification information, where the multiframe lock status identification information indicates whether a multiframe of the transmitting end and/or the receiving end is locked. In this way, the receiving end can identify a locked state of the multiframe of the transmitting end and/or the receiving end.

In a possible implementation, a transmission rate of the first ciphertext data stream is one of the following content: 100 Gbps, 50 Gbps, or 25 Gbps. When the transmission rate of the first ciphertext data stream is 100 Gbps, the first ciphertext data stream may further include an RS-FEC code in an Ethernet architecture, so that the receiving end performs error correction on information in the plaintext data stream corresponding to the first ciphertext data stream. This can effectively resist impact of a link bit error on transmission reliability of the encryption parameter.

According to a second aspect, embodiments of this application provide a data transmission method. The method may be performed by a device at a receiving end, for example, may be performed by a second communication apparatus. The second communication apparatus obtains a first ciphertext data stream. The second communication apparatus decrypts an encrypted first data segment based on encryption parameter information carried in a first AM in the first ciphertext data stream, to obtain a first plaintext data stream. The first ciphertext data stream includes the first AM and the encrypted first data segment; the first AM is used for data alignment of the first ciphertext data stream; the first AM includes at least one of a first AM lock information field, a first lane identification information field, or a first check information field; and at least one of some bits in the first AM lock information field, some bits in the first lane identification information field, or some or all bits in the first check information field is used to carry the encryption parameter information of the first data segment.

In this application, transmission of the encryption parameter information is performed in bit locations in the first AM in the data stream. The method is used at a physical layer of an optical module or a network device, and a sent encryption parameter does not occupy a user service bandwidth. In addition, in the solution, a bit stream at a physical layer is encrypted, and all bits (including a source MAC address and a destination MAC address) in a user frame are encrypted. This can improve security.

In a possible implementation, the second communication apparatus completes AM lock on the first ciphertext data stream based on at least k2 consecutive first AMs in the first ciphertext data stream, where the at least k2 consecutive first AMs meet a preset rule, and k2 is an integer greater than 1. The preset rule met by a first AM in the at least k2 first AMs includes: when information carried by some bits in the first AM lock information field in the first AM includes a part or all of the encryption parameter information, there are a maximum of k3 unmatched nibbles (nibbles) between preset AM lock information and information other than the encryption parameter information in information carried in the first AM lock information field, where k3 is a positive integer. In a possible implementation, when a quantity of bit locations in the first AM lock information field that are used to carry the encryption parameter information is 8, a value of k3 is 1. In an existing standard, when 48 bits in AM lock information is used for AM lock, it is required that at most three nibbles do not match. However, in embodiments of this application, it is considered that some bits (for example, eight bits, which are equivalent to two nibbles) in the first AM lock information field are used to carry the encryption parameter information, a value of k3 may be set to be less than 3, for example, the value of k3 is 1. This can ensure performance of locking based on the first AM lock information field as much as possible.

In a possible implementation, some or all bits in the first AM lock information field may be used to carry AM lock information of the first ciphertext data stream. Some or all bits in the first lane identification information field may be used to carry lane identification information of the first ciphertext data stream. Some or all bits in the first check information field may carry check information. For related descriptions and beneficial effect, refer to related content in the first aspect. Details are not described herein again.

In a possible implementation, the first ciphertext data stream is obtained based on the first plaintext data stream and the encryption parameter information, the first plaintext data stream includes a second AM and the unencrypted first data segment, and the second AM is used for data alignment of the first plaintext data stream. For related descriptions and beneficial effect, refer to related content in the first aspect. Details are not described herein again.

In a possible implementation, the second communication apparatus decrypts the encrypted first data segment based on the encryption parameter information carried in the first AM in the first ciphertext data stream, to obtain the unencrypted first data segment in the first plaintext data stream. The second communication apparatus may process the first AM, to obtain the second AM in the first plaintext data stream. The second communication apparatus restores the first AM to the second AM in the plaintext data stream. This can reduce impact of transmission of the encryption parameter information on another data processing process as much as possible.

In a possible implementation, after processing the first AM to obtain the second AM in the first plaintext data stream, the second communication apparatus may further determine lane identification information of the first plaintext data stream based on the second AM. This can improve accuracy of identifying the lane identification information, and reduce impact of transmission of the encryption parameter information on a process of identifying the lane identification information.

In a possible implementation, the second AM may include at least one of a second AM lock information field, a second lane identification information field, or a second check information field. The second AM lock information field may be used to carry AM lock information of the first plaintext data stream. The second lane identification information field may be used to carry lane identification information of the first plaintext data stream. The second check information field may be used to carry check information. For related descriptions and beneficial effect, refer to related content in the first aspect. Details are not described herein again.

In a possible implementation, the first AM lock information field may be obtained by replacing some bits in the second AM lock information field with the part or all of the encryption parameter information. The first lane identification information field may be obtained by replacing some bits in the second lane identification information field with the part or all of the encryption parameter information. The first check information field is obtained by replacing some bits in the second check information field with the part or all of the encryption parameter information. For related descriptions and beneficial effect, refer to related content in the first aspect. Details are not described herein again.

Because AM lock information carried in the first AM lock information field is a preset value specified in a protocol, when some bits in the first AM lock information field are used to carry the encryption parameter information, the second communication apparatus can restore information in bit locations in the first AM lock information field that are used to carry the encryption parameter information to second preset values. This can reduce impact of transmission of the encryption parameter information on another data processing process as much as possible.

Because original values of bit locations in the first lane identification information field that carry the encryption parameter information are preset values specified in the protocol, when some bits in the first lane identification information field are used to carry the encryption parameter information, the second communication apparatus can restore information in bit locations in the first lane identification information field that are used to carry the encryption parameter information to a first preset value. This can reduce impact of transmission of the encryption parameter information on another data processing process as much as possible.

The values carried in the first check information field are divided into two parts, and one part is values obtained by negating bit values of the other part. Therefore, when some bits in the first check information field are used to carry the encryption parameter information, the second communication apparatus can restore, based on the first check information carried in the first check information field, information in bit locations in the first check information field that are used to carry the encryption parameter information to information obtained negating the bit values corresponding to the first check information. This can reduce impact of transmission of the encryption parameter information on another data processing process as much as possible.

In a possible implementation, bit locations in the first lane identification information field that are used to carry the encryption parameter information are some or all bit locations of k1 bit locations in the second lane identification information field that carry k1 first preset value, and k1 is a positive integer. For related descriptions and beneficial effect, refer to related content in the first aspect. Details are not described herein again.

In a possible implementation, the second communication apparatus may obtain N ciphertext data streams, where the N ciphertext data streams include the first ciphertext data stream and a second ciphertext data stream, the second ciphertext data stream includes a fourth AM and an encrypted second data segment, the fourth AM is used for data alignment of the second ciphertext data stream, and the fourth AM carries encryption parameter information of the second data segment. The second communication apparatus decrypts the second data segment in the second ciphertext data stream based on the encryption parameter information carried in the fourth AM in the second ciphertext data stream, to obtain the unencrypted second data segment in a second plaintext data stream. The second communication apparatus processes the fourth AM, to obtain a third AM in the second plaintext data stream, where the third AM includes a third lane identification information field that carries lane identification information of the second plaintext data stream, and the third lane identification information field includes k1 bit locations that carry the first preset values.

In a possible implementation, for a bit location in the k1 bit locations, a value carried by the bit location in the third lane identification information field is the same as a value carried by the bit location in the second lane identification information field. For related descriptions and beneficial effect, refer to related content in the first aspect. Details are not described herein again.

In a possible implementation, bit locations in the first lane identification information field that are used to carry the encryption parameter information are some or all of the following bit locations in an AM code block corresponding to the first lane identification information field: a 4^{th} bit location, a 13^{th} bit location, a 15^{th} bit location, a 20^{th} bit location, a 36^{th} bit location, a 45^{th} bit location, a 47^{th} bit location, and a 52^{nd} bit location. For related descriptions and beneficial effect, refer to related content in the first aspect. Details are not described herein again.

In a possible implementation, for the first AMs of the at least two first AMs that carry the part or all of the encryption parameter information of the at least one encrypted first data segment, information that is carried in the first AM and that belongs to the encryption parameter information is divided into two parts: a first part of information and a second part of information, and the second part of information is information obtained by negating a bit value corresponding to the first part of information. For related descriptions and beneficial effect, refer to related content in the first aspect. Details are not described herein again.

In a possible implementation, information that is carried in the first AM lock information field and that belongs to the encryption parameter information may be divided into two parts: a third part of information and a fourth part of information, and the fourth part of information is information obtained by negating a bit value corresponding to the third part of information.

Information that is carried in the first lane identification information field and that belongs to the encryption parameter information may be divided into two parts: a fifth part of information and a sixth part of information, and the sixth part of information is information obtained by negating a bit value corresponding to the fifth part of information. Information that is carried in the first check information field and that belongs to the encryption parameter information may be divided into two parts: a seventh part of information and an eighth part of information, and the eighth part of information is information obtained by negating a bit value corresponding to the seventh part of information. For related descriptions and beneficial effect, refer to related content in the first aspect. Details are not described herein again.

In a possible implementation, bit locations in the first AM lock information field that are used to carry the encryption parameter information are some of bit locations of the following fields: an M0 field, an M1 field, an M2 field, a ~M0 field, a ~M1 field, and a -M2 field. For related descriptions and beneficial effect, refer to related content in the first aspect. Details are not described herein again.

In a possible implementation, the bit locations in the first AM lock information field that are used to carry the encryption parameter information are one of the following content: bit locations of first four bits of the M0 field and first four bits of the ~M0 field, bit locations of first four bits of the M1 field and first four bits of the ~M1 field, or bit locations of first four bits of the M2 field and first four bits of the -M2 field. For related descriptions and beneficial effect, refer to related content in the first aspect. Details are not described herein again.

In a possible implementation, bit locations in the first check information field that are used to carry the encryption parameter information are some or all of bit locations of the following fields: a BIP₃ field or a ~BIP₃ field.

In a possible implementation, the bit locations in the first check information field that are used to carry the encryption parameter information are bit locations of first four bits of the ~BIP₃ field and last four bits of the BIP₃ field. For related descriptions and beneficial effect, refer to related content in the first aspect. Details are not described herein again.

In a possible implementation, the encryption parameter information includes an initialization vector IV and a key identification. For related descriptions and beneficial effect, refer to related content in the first aspect. Details are not described herein again.

In a possible implementation, the encryption parameter information includes error correction information of the encryption parameter information. For related descriptions and beneficial effect, refer to related content in the first aspect. Details are not described herein again.

In a possible implementation, the error correction information of the encryption parameter information includes an RS-FEC code and/or a BCH code. For related descriptions and beneficial effect, refer to related content in the first aspect. Details are not described herein again.

In a possible implementation, after the obtaining a first ciphertext data stream and before the decrypting an encrypted first data segment, the method further includes: obtaining the error correction information of the encryption parameter information in the first ciphertext data stream; and performing error correction on other information in the encryption parameter information based on the error correction information of the encryption parameter information. This can effectively resist impact of a link bit error on transmission reliability of the encryption parameter.

According to a third aspect, a communication apparatus is provided, and includes a communication unit and a processing unit. The communication apparatus may be the foregoing first communication apparatus, or may be the foregoing second communication apparatus. The communication apparatus may perform any one of the first aspect and the second aspect and any implementations of the first aspect and the second aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect and the second aspect and any implementations of the first aspect and the second aspect.

According to a fourth aspect, a communication apparatus is provided, and includes a processor and a memory. The communication apparatus may be the foregoing first communication apparatus, or may be the foregoing second communication apparatus. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect and the second aspect and any implementations of the first aspect and the second aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a fifth aspect, a communication apparatus is provided, and includes a processor. The communication apparatus may be the foregoing first communication apparatus, or may be the foregoing second communication apparatus. The processor is coupled to a memory, and may be configured to perform any one of the first aspect and the second aspect and any implementations of the first aspect and the second aspect. The communication apparatus may be the foregoing first communication apparatus, or may be the foregoing second communication apparatus. Optionally, the communication apparatus further includes the memory. Optionally, the communication apparatus further includes a communication interface, and the processor is coupled to the communication interface.

In an implementation, when the communication apparatus is the first communication apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system of the first communication apparatus, the communication interface may be an input/output interface, an interface circuit, an output circuit, an input circuit, a pin, a related circuit, or the like on the chip or the chip system. The processor may alternatively be embodied as a processing circuit or a logic circuit.

In an implementation, when the communication apparatus is the second communication apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system of the second communication apparatus, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a system is provided, and the system includes the foregoing first communication apparatus and the foregoing second communication apparatus.

According to a seventh aspect, a computer program product is provided, and the computer program product includes a computer program (which may also be referred to as code or instructions). When the computer program is run, a computer is enabled to perform any one of the first aspect and the second aspect and any implementations of the first aspect and the second aspect.

According to an eighth aspect, a computer-readable storage medium is provided, and the computer-readable medium stores a computer program (which may also be referred to as code or instructions). When the computer program is run on a computer, the computer is enabled to perform any one of the first aspect and the second aspect and any implementations of the first aspect and the second aspect.

According to a ninth aspect, a chip system is provided, and the chip system may include a processor. The processor is coupled to a memory, and may be configured to perform any one of the first aspect and the second aspect and any implementations of the first aspect and the second aspect. Optionally, the chip system further includes the memory. The memory is configured to store a computer program (which may also be referred to as code or instructions). The processor is configured to invoke the computer program from the memory and run the computer program, so that a device on which the chip system is installed performs any one of the first aspect and the second aspect and any implementations of the first aspect and the second aspect.

According to a tenth aspect, a processing apparatus is provided, and includes an interface circuit and a processing circuit. The interface circuit may include an input circuit and an output circuit. The processing circuit is configured to: receive a signal by using the input circuit, and transmit a signal by using the output circuit, so that any one of the first aspect and the second aspect and any implementations of the first aspect and the second aspect is implemented.

In a specific implementation process, the foregoing processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, the communication apparatus may be some components in the first communication apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

In another implementation, the communication apparatus may be some components in the second communication apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

### BRIEF DESCRIPTION OF DRAWINGS

FIG. 1 is a schematic diagram of a layer 2 encryption data structure;
FIG. 2a is a schematic diagram of a system architecture according to an embodiment of this application;
FIG. 2b is a schematic diagram of another system architecture according to an embodiment of this application;
FIG. 2c shows an architecture of an OSI reference model;
FIG. 2d is a schematic diagram of an architecture of a communication apparatus according to an embodiment of this application;
FIG. 2e-1 and FIG. 2e-2 are a schematic diagram of a data processing procedure of both a transmitting end and a receiving end according to an embodiment of this application;
FIG. 3a is a schematic diagram of a format of an AM code block according to an embodiment of this application;
FIG. 3b is a schematic diagram of a format of an AM on each logical lane at 100 Gbps according to an embodiment of this application;
FIG. 3c is a schematic diagram of a format of an AM on an FEC lane 0 at 100 Gbps according to an embodiment of this application;
FIG. 3d is a schematic diagram of a format of an AM on each logical lane at 50 Gbps according to an embodiment of this application;
FIG. 3e is a schematic diagram of a format of an AM on an FEC lane 0 at 50 Gbps according to an embodiment of this application;
FIG. 3f is a schematic diagram of a format of an AM on a logical lane at 25 Gbps according to an embodiment of this application;
FIG. 3g is a schematic diagram of a format of an AM on another logical lane at 25 Gbps according to an embodiment of this application;
FIG. 4a is a schematic flowchart of a data transmission method according to an embodiment of this application;
FIG. 4b is a schematic flowchart of another data transmission method according to an embodiment of this application;
FIG. 5a is a schematic diagram of bit locations, in the AM in FIG. 3c, that may be used to carry encryption parameter information according to an embodiment of this application;
FIG. 5b is a schematic diagram of a structure of a multiframe of encryption parameter information carried in a first ciphertext data stream according to an embodiment of this application;
FIG. 6 is a schematic flowchart of still another data transmission method according to an embodiment of this application;
FIG. 7a is a schematic diagram of an example of mean time to loss alignment and mean time to alignment in four cases according to an embodiment of this application;
FIG. 7b is an effect display diagram of bit error rates after error correction of an RS-FEC code in an Ethernet architecture at a transmission rate of (25 Gbps) in Case b0 and Case b1 according to an embodiment of this application;
FIG. 7c is an effect display diagram of bit error rates after error correction of an RS-FEC code in an Ethernet architecture at a transmission rate of (50 Gbps) in Case b0 and Case b2 according to an embodiment of this application;
FIG. 7d is an effect display diagram of bit error rates after error correction of an RS-FEC code in an Ethernet architecture at a transmission rate of (100 Gbps) in Case b0 and Case b3 according to an embodiment of this application;
FIG. 8 is a schematic diagram of an architecture of another communication apparatus according to an embodiment of this application;
FIG. 9 is a schematic diagram of an architecture of still another communication apparatus according to an embodiment of this application; and
FIG. 10 is a schematic diagram of an architecture of yet another communication apparatus according to an embodiment of this application.

### DESCRIPTION OF EMBODIMENTS

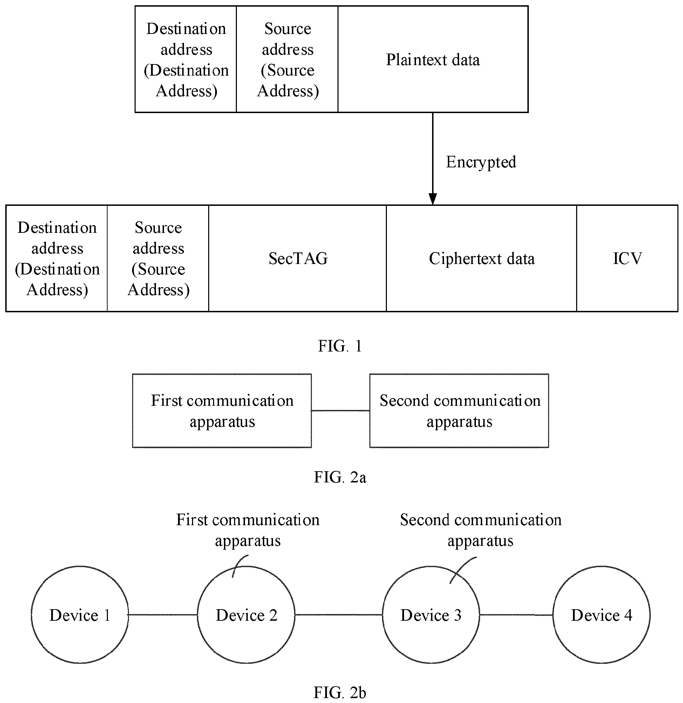

The following first describes an encryption solution with reference to FIG. 1. FIG. 1 is a schematic diagram of an example of a layer 2 encryption data structure. As shown in FIG. 1, an encryption side separately encrypts each data frame by using one key (Key) and one initial vector (Initialization Vector, IV). The encryption side may encrypt, by using a locally preconfigured key (Key) and the initial vector, unencrypted data (the unencrypted data may also be referred to as plaintext data (Plain Data)) in a data frame in the figure, to obtain encrypted data. The encrypted data may also be referred to as ciphertext data (Encrypted Data). To prevent the data from being tampered by an attacker during transmission, the encryption side usually generates a check value, for example, an integrity check value (Integrity Check Value, ICV). When the encryption side sends a packet, the packet carries the ciphertext data, a security tag (security tag, SecTAG), and the ICV generated during encryption. The SecTAG includes a key identification (Key Identification) and an IV identification (IV Identification).

After receiving the data frame, a decryption side decrypts the data frame based on the key corresponding to the key identification and the IV corresponding to the IV identification. After the decryption, the ciphertext data (Encrypted Data) becomes the plaintext data (Plain Data). To determine whether the data is tampered during transmission, the decryption side calculates an ICV The decryption is valid only when the ICV is consistent with the ICV carried in the data frame, otherwise, the decryption is invalid.

A layer for implementing an encryption technology based on a MACsec protocol and the like is on a MAC layer, and each user frame is an object of encryption and decryption. In a method for encrypting each user frame at the MAC layer by using the encryption technology based on the MACsec protocol, an encryption parameter needs to be carried in the user frame. When the encryption parameter is at least 28 bytes (12 bytes for the IV and 16 bytes for the ICV) and an average frame length is 64 bytes, the encryption parameter occupies 43% (28/64=43%) of a user service bandwidth, and costs are high. Based on this, embodiments of this application provide a data transmission solution, so that an encryption parameter does not occupy a user service bandwidth. The following further describes embodiments of this application with reference to the accompanying drawings.

FIG. 2a is a schematic diagram of an example of a system architecture according to an embodiment of this application. As shown in FIG. 2a, the system architecture includes a first communication apparatus and a second communication apparatus. For either of the first communication apparatus and the second communication apparatus, the apparatus may be a network device, or a chip disposed inside the network device. The apparatus may be a network device that supports an Ethernet interface. The apparatus includes but is not limited to: an optical module, a core router, a network protocol-based radio access network (Internet Protocol Radio Access Network, IPRAN), and a packet transport network (Packet Transport Network, PTN) box or frame switch device. The optical module may be, for example, a module including an optical digital signal processor (optical digital signal processor, oDSP).

In embodiments of this application, the first communication apparatus obtains a first ciphertext data stream, and sends the first ciphertext data stream, for example, sends the first ciphertext data stream to the second communication apparatus. The first ciphertext data stream includes a first alignment marker AM and an encrypted first data segment, and the first AM is used for data alignment of the first ciphertext data stream. The first AM includes at least one of a first AM lock information field, a first lane identification information field, or a first check information field. At least one of some bits in the first AM lock information field, some bits in the first lane identification information field, or some or all bits in the first check information field is used to carry encryption parameter information of the first data segment. The second communication apparatus obtains the first ciphertext data stream, decrypts the encrypted first data segment based on the encryption parameter information carried in the first AM in the first ciphertext data stream, to obtain a first plaintext data stream.

In this application, transmission of the encryption parameter information is performed in bit locations in the first AM in the data stream, without additionally adding a bit location for transmission of the encryption parameter information. Therefore, transmission of the encryption parameter information occupies no user service bandwidth, so that a degree of user bandwidth occupied by an encryption parameter can be reduced. In addition, because the data stream (or referred to as a bit stream) at a physical layer is encrypted for transmission in this application, all bits (including a source MAC address and a destination MAC address) in an Ethernet frame can be encrypted. This can improve security.

In embodiments of this application, the first communication apparatus may also be referred to as a transmitting end, an encryption end, a source end (source end), a transmitting device, a transmitting side, a transmitting end side, or the like. The second communication apparatus may also be referred to as a receiving end, a decryption end, a destination end (destination end), a receive device, a receiving side, a receiving end side, or the like. This is not specifically limited in embodiments of this application. In embodiments of this application, for a related solution of the transmitting end, refer to a solution on a first communication apparatus side, and for a solution of the receiving end, refer to a solution on a second communication apparatus side.

FIG. 2b is a schematic diagram of an example of another system architecture according to an embodiment of this application. The system architecture includes a plurality of devices, for example, a device 1, a device 2, a device 3, and a device 4. The first communication apparatus and the second communication apparatus in FIG. 2a may be any two communication apparatuses in FIG. 2b, for example, may be any two adjacent communication apparatuses in FIG. 2b. In this embodiment of this application, data transmission may be bidirectional transmission. For example, a data transmission direction may be transmission from the device 1 to the device 4 in FIG. 2b, or may be transmission from the device 4 to the device 1. The transmission direction from the device 1 to the device 4 is used as an example. For example, a first communication apparatus is the device 1, and a second communication apparatus is the device 2. For another example, a first communication apparatus is the device 2, and a second communication apparatus is the device 3. For still another example, a first communication apparatus is the device 3, and a second communication apparatus is the device 4.

It should be noted that when the device 1 sends data to the device 2, the device 2 may perform a solution on a receiving side; and when the device 2 sends data to the device 3, the device 2 may perform a solution on a transmitting side. In other words, in embodiments of this application, one device may perform both the solution on the transmitting side and the solution on the receiving side. For the solution on the transmitting side of the device, refer to the solution on the first communication apparatus side, and for the solution on the receiving side, refer to the solution on the second communication apparatus side. In FIG. 2b, an example in which the first communication apparatus is the device 2 and the second communication apparatus is the device 3 is used for presentation.

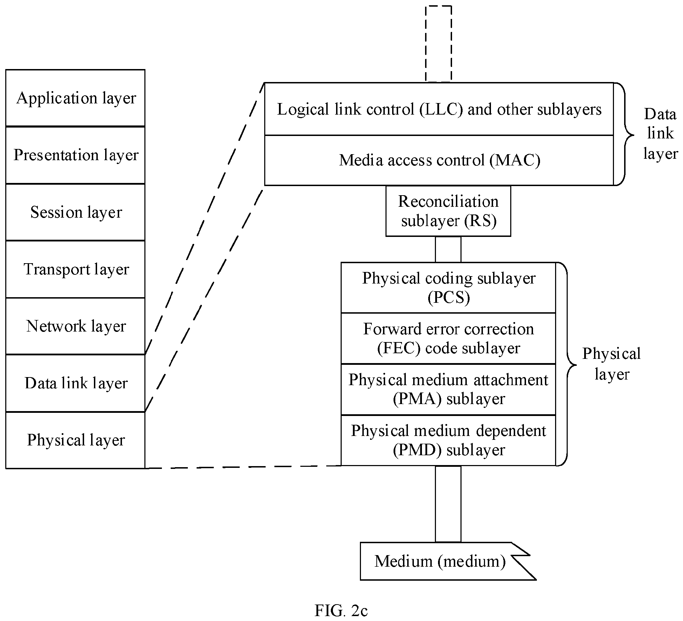

FIG. 2c shows an example of an architecture of an OSI reference model. The architecture of the OSI reference model is a network interconnection model, and defines a seven-layer framework of network interconnection, which is sequentially a physical layer, a data link layer, a network layer, a transport layer, a session layer, a presentation layer, and an application layer from bottom to top.

Ethernet is located at the data link layer and physical layer of the OSI reference model. As shown in FIG. 2c, the data link layer includes two sublayers: a logical link control (logical link control, LLC) sublayer and a media access control (medium access control, MAC) sublayer responsible for parsing and assembling an Ethernet frame.

As shown in FIG. 2c, the physical layer may include a physical medium dependent sublayer (physical medium dependent sublayer, PMD) (also referred to as a PMD layer), a physical medium attachment sublayer (physical medium attachment sublayer, PMA) (also referred to as a PMA layer), a forward error correction (forward error correction, FEC) code (also referred to as an FEC layer), and a physical coding sublayer (physical coding sublayer, PCS) (also referred to as a PCS layer). A reconciliation sublayer (reconciliation sublayer, RS) (also referred to as an RS layer) is also included between the PCS layer and the MAC layer.

FIG. 2c further shows a medium (medium) connected to the PMD. The medium may be a cable, a pluggable optical module, an optical fiber, or the like.

It should be noted that a MACsec technology is specifically deployed on the MAC sublayer at the data link layer. An encryption object and a decryption object are an Ethernet frame (or referred to as a user frame). However, solutions provided in embodiments of this application are deployed at the physical layer, and the encryption object and the decryption object may be a data segment of a logical lane.

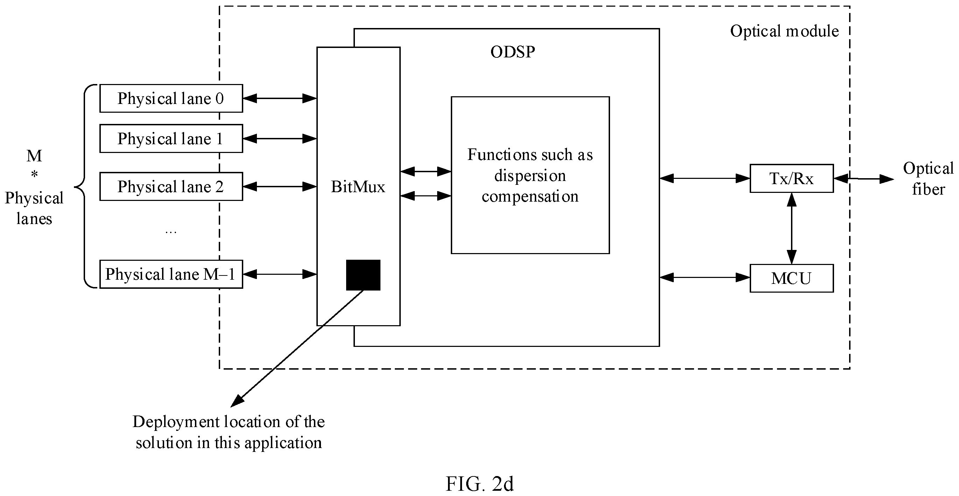

FIG. 2d is a schematic diagram of an example of an architecture of a communication apparatus according to an embodiment of this application. The solutions in embodiments of this application are applied to an optical module that supports an Ethernet connection. FIG. 2d shows the example in which the communication apparatus is the optical module, and FIG. 2d shows a possible deployment location when the solutions in embodiments of this application are deployed on the optical module.

As shown in FIG. 2d, the optical module may include a bit multiplexer or demultiplexer (BitMux), an ODSP, a micro-controller unit (micro-controller unit, MCU), and an electro-optical transceiver (including a transmitter (transmitter, TX)/receiver (receiver, RX)).

The MCU in the optical module may be responsible for configuring a parameter of each function module. For example, the MCU may be used to configure initialization parameters for encryption and decryption in embodiments of this application, and the parameters include key information such as enabling or suspending encryption and decryption functions and configuring a key negotiated by an upper layer.

As shown in FIG. 2d, the BitMux converts a signal flow from an input lane into an output lane in a bit interleaving manner. When being deployed at a physical layer, the BitMux is configured to implement conversion between N logic lanes and M physical lanes, for example, convert signal flows of four logic lanes into two physical lanes.

When being deployed in the optical module, the BitMux is configured to implement conversion between signals of M physical lanes and K digital signals, for example, convert signal flows of two physical lanes into two digital signals. In the architecture of the communication apparatus in FIG. 2d, the BitMux between M physical lanes (M is a positive integer) and K lanes (K is a positive integer) in the ODSP may be divided into two BitMuxs: an M:N BitMux and an N:K BitMux, where N is a quantity of logical lanes, and N is a positive integer. Then, encryption and decryption and a corresponding function module are introduced between the two BitMuxs. In this embodiment of this application, the encryption side and/or decryption side solution in embodiments of this application is introduced between the two BitMuxs, and another functional component in the module is unaware of the encryption side and/or decryption side solution.

The optical module shown in FIG. 2d should be capable of performing the solution for the receiving end. For example, the device is the device 2 in FIG. 2a. When the optical module performs the solution for the receiving end, the optical module may receive an optical signal from the device 1 through an optical fiber. In this example, for the solution performed by the device 2, refer to the solution on the second communication apparatus side, and for a solution performed by the device 1, refer to the solution on the first communication apparatus side. The optical signal is processed by the receiver through electro-optical conversion and an ODSP algorithm (for example, dispersion compensation), and then a digital signal is output to the BitMux. The BitMux converts the digital signal output by the ODSP into N logical lane signals, converts the N logical lane signals into M physical lane signals, and transmits the M physical lane signals to an electrical chip at the physical layer. It should be noted that the physical lane signals and the logic lane signals are digital signals.

The optical module shown in FIG. 2d may further perform the solution for the transmitting end. For example, the device is the device 2 in FIG. 2a. When the optical module performs the solution for the transmitting end, the BitMux may convert, into N logical lane signals, M physical lane signals input to the optical module, and then convert the N logical lane signals into K physical lane signals and input the K physical lane signals into digital signals of the ODSP. The ODSP is responsible for performing algorithm processing (for example, dispersion compensation preprocessing) on the input digital signal, processing the input digital signal by the electro-optical transceiver, and sending a processed digital signal to the device 3 through an optical fiber. In this example, for the solution performed by the device 2, refer to the solution on the first communication apparatus side, and for the solution performed by the device 3, refer to the solution on the second communication apparatus side.

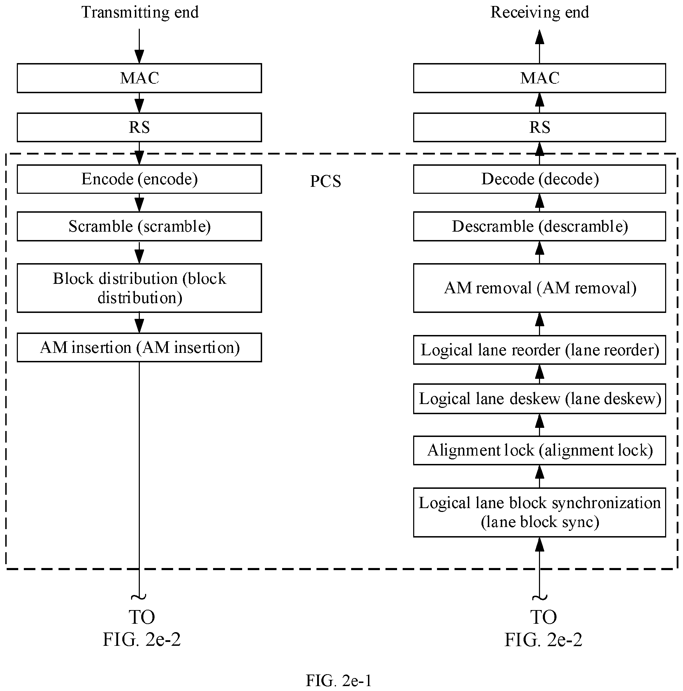

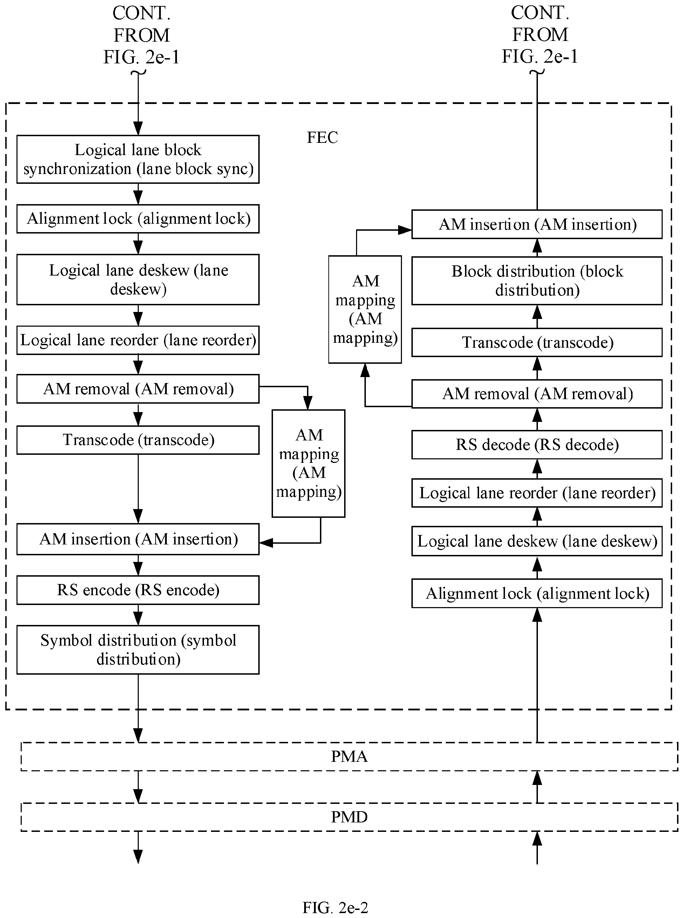

FIG. 2e-1 and FIG. 2e-2 are a schematic diagram of a data processing procedure of both a transmitting end and a receiving end according to an embodiment of this application. It should be noted that, in this embodiment of this application, a PCS layer may have a logical lane, which may be referred to as a PCS logical lane or a PCS lane. An FEC layer may also have a logical lane, which may be referred to as an FEC logical lane or an FEC lane.

FIG. 2e-1 and FIG. 2e-2 are described by using a system architecture with an FEC lane and a transmission rate of 100 Gbps as an example. In this example, there are two physical lanes, 20 logical lanes at the PCS layer, and four logical lanes at the FEC layer. In actual application, the quantity of physical lanes may be another value, for example, may be 4. This is not limited in this embodiment of this application.

The transmitting end in FIG. 2e-1 and FIG. 2e-2 receives a string of data streams, and the data streams are sequentially processed at a MAC layer and an RS layer, and then enter the PCS layer. Encode (encode) is performed on the data streams at the PCS layer to obtain a string of 64/66B code block streams (the code block stream may alternatively be in another encoding form, and a 64/66B encoding form is used as an example herein). After scrambling (scramble) is performed on the code block streams, block distribution is performed. After block distribution (block distribution) is performed on the string of scrambled code block streams, 20 code block streams corresponding to the 20 PCS lanes (which may also be referred to as PCS logical lanes) may be formed, and one PCS lane corresponds to one code block stream. Further, the transmitting end may perform AM insertion (AM insertion) on the 20 code block streams, to periodically insert an AM into a code block stream corresponding to each of the 20 PCS lanes. After converting, at the PCS layer, one serial data streams into 20 parallel code block streams corresponding to the 20 PCS lanes, the transmitting end may input the 20 code block streams to the FEC layer.

Further, the transmitting end performs logical lane block synchronization (lane block sync), alignment lock (alignment lock), logical lane deskew (lane deskew), and logical lane reorder (lane reorder) on the 20 code block streams at the FEC layer, to restore the 20 parallel code block streams to one serial code block stream. Then, AM removal (AM removal) is performed on the serial code block stream, to remove an AM from the serial code block stream. Transcode (transcode) is performed on one serial code block stream from which the AM is removed, to obtain one serial 256/257B code block stream (the code block stream may alternatively be in another encoding form, and the 256/257B encoding form is used as an example herein). Then, AM insertion (AM insertion) is performed on a transcoded serial code block stream, so that an AM is periodically inserted into the serial code block stream. RS encode (RS encode) and symbol distribution (symbol distribution) are performed on the serial code block stream into which the AM is inserted, to obtain four parallel code block streams corresponding to the four FEC lanes.

Further, the FEC layer of the transmitting end outputs the four code block streams corresponding to the four FEC lanes to PMA. Then, in the PMA, a BitMux built at the PMA converts, according to a ratio of 4:2, the four code block streams corresponding to the four FEC lanes into two physical lanes, to obtain code block streams corresponding to the two physical lanes. Then, the code block streams corresponding to the two physical lanes pass through PMD, a medium, and the like and are transmitted in a form of an electrical signal or an optical signal.

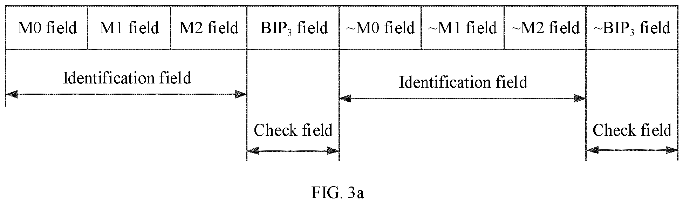

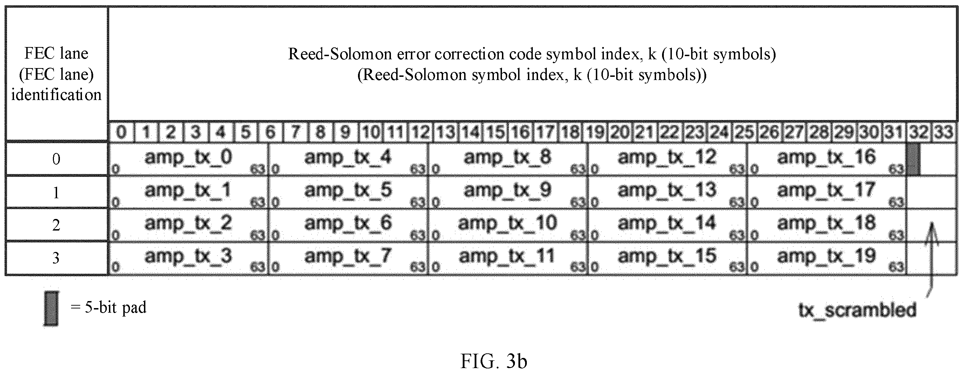

It should be noted that, for a format of the AM inserted by the transmitting end at the PCS layer, refer to a format of an AM defined at the PCS layer. For a format of the AM inserted by the transmitting end at the FEC layer, refer to a format of an AM defined at the FEC layer. FIG. 3b in subsequent content is a schematic diagram of an example of a format of each of four AMs corresponding to FEC lanes in a system architecture with the FEC lanes and a transmission rate of 100 Gbps. In a possible implementation, PCS lanes may correspond to 20 AMs at a transmission rate of 100 Gbps, and each AM may be one AM code block. To be specific, for a format of each of the 20 AMs corresponding to 20 PCS lanes, refer to a structure of an AM code block shown in FIG. 3a. At least one bit in any two of the 20 AMs corresponding to the 20 PCS lanes has a different value.

As shown in FIG. 2e-1 and FIG. 2e-2, for the transmitting end, an encryption solution may be specifically implemented in a process after a chip at the physical layer obtains, by using the PMA, data streams corresponding to a plurality of FEC lanes and before the serial stream is restored, or implemented in a process in which an optical module (the medium) processes the received data stream.

As shown in FIG. 2e-1 and FIG. 2e-2, after processing, at the PMD, the two received code block streams corresponding to the two physical lanes, the receiving end may input two processed code block streams to the PMA layer. At the PMA layer, the two code block streams corresponding to the two physical lanes are converted into four FEC lanes according to a ratio of 2:4, to obtain four code block streams corresponding to the four FEC lanes, and the four code block streams are input to the FEC layer.

Further, the receiving end performs, at the FEC layer, alignment lock (alignment lock), logical lane deskew (lane deskew), and logical lane reorder (lane reorder) on the four code block streams corresponding to the four FEC lanes, to restore the four parallel code block streams to one serial code block stream. Then, RS decode (RS decode) may be performed on the serial code block stream, to correct a bit error. Further, AM removal (AM removal) is performed on the serial code block stream on which RS decode (RS decode) is performed, to remove the AM from the serial code block stream. Transcode (transcode) is performed on the serial code block stream from which the AM is removed, to obtain the serial 64/66B code block stream. Block distribution (block distribution) is performed on the transcoded serial code block stream, to obtain the 20 code block streams corresponding to the 20 PCS lanes, and then AM insertion (AM insertion) is performed, to periodically insert an AM into each code block stream in the 20 parallel code block streams. In addition, the 20 parallel code block streams into which the AMs are inserted are transmitted to the PCS layer for processing. In embodiments of this application, it is subsequently mentioned that an Ethernet architecture may have error correction performance of an RS-FEC code, and an RS-FEC code in an Ethernet architecture may be implemented in a step of RS decode (RS decode) at the FEC layer.

Further, the receiving end performs logical lane block synchronization (lane block sync), alignment lock (alignment lock), logical lane deskew (lane deskew), and logical lane reorder (lane reorder) on the 20 parallel code block streams at the PCS layer, to obtain a string of 64/66B code block streams. AM removal (AM removal) is performed on the serial code block stream, to remove the AM from the serial code block stream. Descramble (descramble) and decode (decode) are performed on the serial code block stream from which the AM is removed, to recover the serial data stream. Further, the receiving end sequentially performs processing on the serial data stream at an RS layer, a MAC layer, and the like, to restore the original service data stream sent by the transmitting end.

As shown in FIG. 2e-1 and FIG. 2e-2, for the receiving end, a decryption solution may be specifically implemented in a process after a chip at the physical layer obtains, by using the PMA, data streams corresponding to a plurality of FEC lanes and before the serial stream is restored, or implemented in a process in which an optical module (the medium) processes the received data stream.

The following first describes some concepts or relationships between concepts in embodiments of this application.

### (1) Plaintext data stream

In embodiments of this application, N plaintext data streams are N unencrypted data streams. One plaintext data stream in the N plaintext data streams is used as an example for description. For differentiation, the plaintext data stream in the N plaintext data streams is referred to as a first plaintext data stream, where N is a positive integer.

The first plaintext data stream includes at least two AMs and at least one unencrypted data segment. For differentiation, the AM in the first plaintext data stream is referred to as a second AM, and the at least one data segment in the first plaintext data stream is referred to as a first data segment. The unencrypted first data segment may also be referred to as a plaintext data segment, or referred to as a first plaintext data segment. The at least two second AMs are used for data alignment of the N plaintext data streams.

One plaintext data segment may be included between every two second AMs, and one second AM may be included between every two plaintext data segments.

In an implementation method, the second AM in the first plaintext data stream may be periodically inserted. The second AM and the unencrypted first data segment in the first plaintext data stream may appear periodically. Each periodicity may include one second AM and one plaintext data segment.

### (2) Ciphertext data stream

In embodiments of this application, N ciphertext data streams are N encrypted data streams. One ciphertext data stream in the N ciphertext data streams is used as an example for description. For differentiation, the ciphertext data stream in the N ciphertext data streams is referred to as a first ciphertext data stream.

The first ciphertext data stream includes at least two AMs and at least one encrypted data segment. For differentiation, a data alignment unit in the first ciphertext data stream is referred to as a first AM. A data segment in the first ciphertext data stream is an encrypted data segment, and may also be referred to as a ciphertext data segment.

The first ciphertext data stream includes at least two AMs and at least one encrypted data segment. For differentiation, the AM in the first ciphertext data stream is referred to as a first AM, and the at least one encrypted data segment in the first ciphertext data stream is referred to as an encrypted first data segment. The encrypted first data segment may also be referred to as a ciphertext data segment, or referred to as a first ciphertext data segment. The at least two first AMs are used for data alignment of the N ciphertext data streams.

### (3) Relationship between the plaintext data stream and the ciphertext data stream

In embodiments of this application, the N plaintext data streams are encrypted, to obtain the N ciphertext data streams. The N plaintext data streams are in a one-to-one correspondence with the N ciphertext data streams.

The first plaintext data stream in the N plaintext data streams is used as an example for description, and the first plaintext data stream corresponds to the first ciphertext data stream in the N ciphertext data streams. The unencrypted first data segment in the first plaintext data stream is encrypted, to obtain the encrypted first data segment in the first ciphertext data stream. The second AM in the first plaintext data stream is processed, to obtain the first AM, corresponding to the second AM, in the first ciphertext data stream.

In embodiments of this application, processing performed on the second AM in the first plaintext data stream may include an operation such as adding encryption parameter information to the second AM.

### (4) Logical lane

In embodiments of this application, the logical lane (logic lane) is also referred to as a virtual lane, and is a PCS lane (or referred to as a PCS logical lane) or an FEC lane (or referred to as an FEC logical lane). For example, in a system architecture with FEC and a transmission rate of 100 Gbps, a logical lane may be referred to as an FEC lane. In a system architecture with transmission rates of 50 Gbps and 25 Gbps, a logical lane may also be referred to as an FEC lane. A logical lane in a 200 Gbps/400 Gbps standard may be referred to as a PCS logical lane. For example, in an Ethernet specification, there are four FEC lanes in a system architecture with an FEC lane and a transmission rate of 100 Gbps, two FEC lanes corresponding to 50 Gbps, and one FEC lane corresponding to 25 Gbps.

It should be noted that embodiments of this application are presented by using a logical lane in a system architecture with FEC and a transmission rate of 100 Gbps, and logical lanes in system architectures with a transmission rate of 50 Gbps and a transmission rate of 25 Gbps as an example. A logical lane mentioned in subsequent content in embodiments of this application may be understood as an FEC lane.

### (5) Physical lane

In embodiments of this application, a physical lane (physical lane) may be the PMA lane. One physical lane may carry data of one or more logic lanes. In Ethernet with different rates, a quantity of physical lanes varies based on different implementations.

### (6) First AM and second AM

When transmission of a data stream is performed on different logical lanes, a receiving end may align a plurality of logical lanes based on an AM (for example, the first AM or the second AM). In embodiments of this application, the AM is one bit location or a plurality of consecutive bit locations that carry information including data alignment information of the N plaintext data streams. Information carried on one AM may be information carried on a bit location included in the AM. IEEE 802.3 defines an alignment marker (alignment marker, AM). In addition to an AM designed in an existing specification, the AM mentioned in embodiments of this application may be one bit location or a plurality of consecutive bit locations that carry data alignment information of the N plaintext data streams and that are defined in another future specification or in another form.

A transmitting end converts one serial stream into N data streams corresponding to N logical lanes (for example, N FEC lanes), where an AM (for example, the second AM in the first plaintext data stream) (periodically inserted by the transmitting end) is periodically deployed in a data stream corresponding to each logical lane.

A receiving end obtains the data streams (for example, may be the N ciphertext data streams) corresponding to the N logical lanes, and may perform lane lock on an AM (for example, the first AM in the first ciphertext data stream) corresponding to each logical lane, to combine the data streams corresponding to the N logical lanes to restore the serial stream.

Formats of AMs corresponding to different transmission rates (for example, 25 Gbps, 50 Gbps, or 100 Gbps) may be different. The following separately describes formats of the AMs specified in the standard at 100 Gbps, 50 Gbps, and 25 Gbps.

In embodiments of this application, the AM may include at least one AM data unit, and the AM data unit may be one bit location or a string of consecutive bit locations. The AM data unit may be referred to as an AM code block.

### (6.1) Format of an AM code block, where the AM code block includes an identification field and a check field.

FIG. 3a is a schematic diagram of an example of a format of an AM code block. As shown in FIG. 3a, the AM code block may include eight fields: an M0 field, an M1 field, an M2 field, a BIP₃ field, a ~M0 field, a ~M1 field, a -M2 field, and a ~BIP₃ field. Each field may include eight bytes.

As shown in FIG. 3a, information carried in the AM code block may be classified into two types: identification information and check information. The M0 field, the M1 field, the M2 field, the ~M0 field, the ~M1 field, and the -M2 field carry the identification information, and the BIP₃ field and the ~BIP₃ field carry the check information, for example, a bit interleaving parity (bit interleaving parity, BIP) check value.

Based on this, all fields included in the AM code block may be divided into two fields: an identification field and a check field.

The identification field in the AM code block may include the M0 field, the M1 field, the M2 field, the ~M0 field, the ~M1 field, and the -M2 field in the AM code block. It should be noted that, the AM code block may be referred to as including one identification field. For clearer identification in the figure, the identification field in the AM code block is marked as two parts in the figure. One part is the M0 field, the M1 field, and the M2 field, and the other part is the ~M0 field, the ~M1 field, and the -M2 field.

The check field in the AM code block may include the BIP₃ field and the ~BIP₃ field. It should be noted that the AM code block may be referred to as including one check field. For clearer identification in the figure, the check field in the AM code block is marked as two parts in the figure. One part is the BIP₃ field, and the other part is the ~BIP₃ field.

### (6.2) AM on a logical lane with a transmission rate of 100 gigabits per second (giga bits per second, Gbps)

An AM in each logical lane may include an AM lock information field, a lane identification information field, and a check information field.

The AM lock information field may be used to carry AM lock information.

The lane identification information field is used to carry lane identification information of the logical lane.

The check information field is used to carry check information.

FIG. 3b shows an example of a format of an AM on a logical lane with a transmission rate of 100 Gbps. As shown in FIG. 3b, N may be 4, and there are four logical lanes (in the figure, an example in which the logical lanes are FEC lanes is used for illustration), where one AM on an FEC lane 0 includes amp_tx_0, amp_tx_4, amp_tx_8, amp_tx_12, and amp_tx_16. One AM on an FEC lane 1 includes amp_tx_1, amp_tx_5, amp_tx_9, amp_tx_13, and amp_tx_17. One AM on an FEC lane 2 includes amp_tx_2, amp_tx_6, amp tx 10, amp_tx_14, and amp_tx_18. One AM on an FEC lane 3 includes amp_tx_3, amp_tx_7, amp tx 11, amp_tx_15, and amp_tx_19.

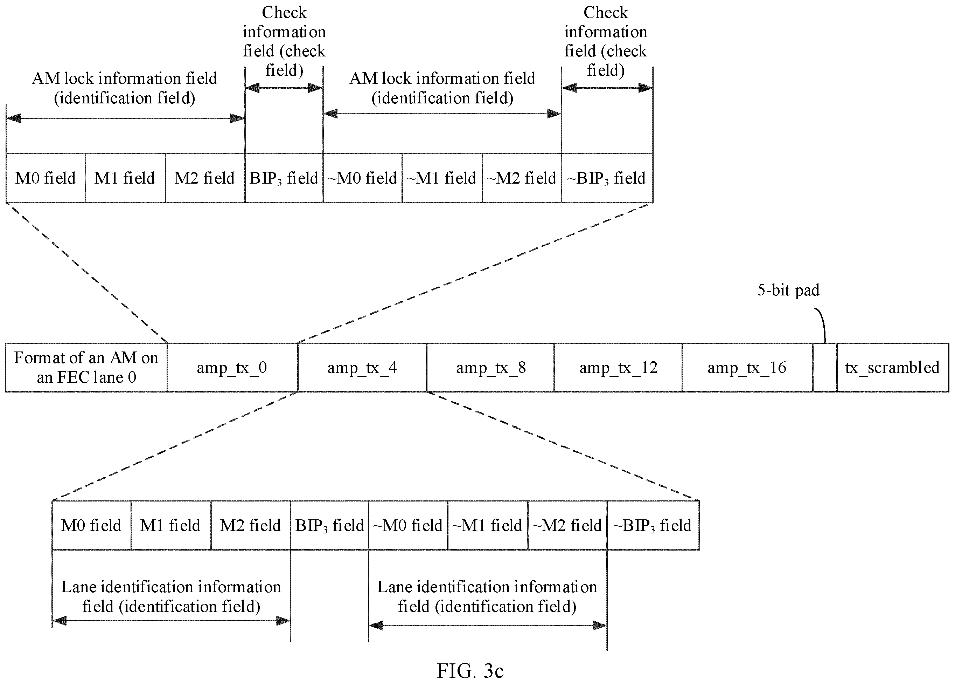

Each of amp_tx_0, amp_tx_1, amp_tx_2, ..., and amp_tx_19 in the four FEC lanes may be an AM code block. For a structure of the AM code block, refer to the AM code block shown in FIG. 3a. FIG. 3c is a schematic diagram of an example of correspondences between AM code blocks and amp_tx_1 and amp_tx_0 in the AM on the FEC lane 0. The following describes the AM with reference to FIG. 3b and FIG. 3c.

### (6.2.1) AM lock information field in the AM on the logical lane with the transmission rate of 100 Gbps

Refer to FIG. 3b and FIG. 3c. The lock information field in the AM on the FEC lane 0 may include an identification field in amp_tx_0. Details are described below.

For the four FEC lanes, information carried in identification fields in amp_tx_0, amp_tx_1, amp_tx_2, and amp_tx_3 is the same, and may be a preset value, for example, preset AM lock information. For example, information carried in a bit of an identification field in amp_tx_0 is the preset AM lock information, and information carried in a bit of an identification field in amp_tx_1 is the preset AM lock information. For each FEC lane, the receiving end may perform AM lock based on information carried in an identification field of a first AM code block in an AM on the FEC lane. AM lock may also be understood as lane lock.

It should be noted that one AM may include one AM lock information field. In FIG. 3c, for clearer identification, one AM lock information field in the AM is marked as two parts in the figure. One part is an M0 field, an M1 field, and an M2 field in amp_tx_0, and the other part is a ~M0 field, a ~M1 field, and a ~M2 field in amp_tx_0.

In a possible implementation, the receiving end may divide six bytes of an identification field in a first AM code block in the received AM, to obtain 12 nibbles (nibbles). When determining that at least two AMs match the preset AM lock information, the receiving end may determine that AM lock is implemented, or lane lock is implemented, or may be understood as determining that the AM is identified.

For the AM, that the AM matches the preset AM lock information may include: determining that the first AM code block in the AM meets a preset rule. The preset rule may include: matching the 12 nibbles in the first AM code block with the preset AM lock information, where a quantity of matched nibbles is greater than a preset matching quantity, or a quantity of unmatched nibbles is less than a preset mismatch quantity. In an example, when the receiving end performs AM lock based on a second AM code block, the preset quantity of mismatched pieces in the preset rule may be 3. However, in a possible implementation subsequently further provided in embodiments of this application, the receiving end may perform AM lock based on the first AM code block. To reduce a bit error rate in an AM lock process, the preset quantity of mismatched pieces in the preset rule may be adjusted, for example, may be reduced to 1. The solution is to be described in detail in subsequent content, and is not described herein.

Based on this, in this application, the identification information field in the first AM code block in the AM on the FEC lane with the transmission rate of 100 Gbps is referred to as the AM lock information field, and information carried in the AM lock information field includes at least AM lock information. In embodiments of this application, for differentiation, an AM lock information field in the first AM in the first ciphertext data stream is referred to as a first AM lock information field, and an AM lock information field in the second AM in the first plaintext data stream is referred to as a second AM lock information field.

It should be noted that, in FIG. 3b, information carried in any two of identification fields of amp_tx_16, amp_tx_17, amp _tx_18, and amp_tx_19 is also the same, and may also be used to carry AM lock information in low power consumption. An AM lock information field in the AM on the FEC lane 0 may also include an identification field in amp_tx_16. Similarly, an AM lock information field in the AM on the FEC lane 1 may also include an identification field in amp_tx_17. An AM lock information field in the AM on the FEC lane 2 may also include an identification field in amp_tx_18. An AM lock information field in the AM on the FEC lane 3 may also include an identification field in amp_tx_19.

### (6.2.2) Lane identification information field in the AM on the logical lane with the transmission rate of 100 Gbps

Refer to FIG. 3b and FIG. 3c. A lane identification information field in the AM on the FEC lane 0 may include an identification field in at least one of amp_tx_4, amp_tx_8, and amp_tx_12. FIG. 3c is a schematic diagram of the lane identification information field including the identification field in amp_tx_4. The following provides detailed descriptions with reference to FIG. 3c.

For the FEC lane 0, information carried in three identification fields in three AM code blocks in amp_tx_4, amp_tx_8, and amp_tx_12 may jointly indicate lane identification information corresponding to the FEC lane 0. The lane identification information field in the AM on the FEC lane 0 may be the three identification fields in the three AM code blocks in amp_tx_4, amp_tx_8, and amp_tx_12.

Similarly, a lane identification information field in the AM on the FEC lane 1 may be three identification fields in three AM code blocks in amp_tx_5, amp_tx_9, and amp_tx_13. A lane identification information field in the AM on the FEC lane 2 may be three identification fields in three AM code blocks in amp_tx_6, amp_tx_10, and amp_tx_14. A lane identification information field in the AM on the FEC lane 3 may be the three identification fields in three AM code blocks in amp_tx_7, amp_tx_11, and amp_tx_15. An identification field in one AM code block may include the M0 field, the M1 field, the M2 field, the ~M0 field, the ~M1 field, and the -M2 field in FIG. 3a.

Lane identification information corresponding to any two logical lanes is different. For example, a value of at least one bit in lane identification information (information carried in all the identification fields in amp_tx_4, amp_tx_8, and amp_tx_12) corresponding to the FEC lane 0 is different from that of lane identification information (information carried in all the identification fields in amp_tx_5, amp_tx_9, and amp_tx_13) corresponding to the FEC lane 1.

In embodiments of this application, for differentiation, a lane identification information field in the first AM in the first ciphertext data stream is referred to as a first lane identification information field, and a lane identification information field in the second AM is referred to as a second lane identification information field.

### (6.2.3) Check information field in the AM on the FEC lane with the transmission rate of 100 Gbps

Refer to FIG. 3b and FIG. 3c. For the FEC lane 0, a check information field in an AM may include a check field in at least one AM code block included in the AM. In FIG. 3c, an example in which the check information field in the AM may include a check field in amp tx 0 is used for presentation.

In embodiments of this application, for differentiation, a check information field in the first AM in the first ciphertext data stream is referred to as a first check information field, and a check information field in the second AM is referred to as a second check information field.

### (6.3) Format of the AM on the FEC lane with the transmission rate of 50 Gbps

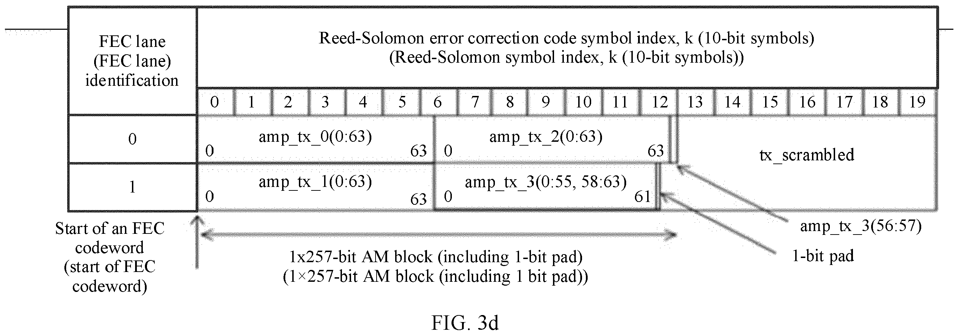

FIG. 3d shows an example of a format of an AM on a logical lane with a transmission rate of 50 Gbps. As shown in FIG. 3d, N may be 2, and there are two logical lanes. One AM on an FEC lane 0 includes amp_tx_0 and amp_tx_2, and the FEC lane 0 may further include a 56^{th} bit and a 57^{th} bit in amp_tx_3 (a first bit in amp_tx_3 is referred to as a 0^{th} bit). One AM on an FEC lane 1 includes amp_tx_1 and amp_tx_3. The FEC lane 1 includes a 0^{th} bit to a 55^{th} bit in amp_tx_3, and a 58^{th} bit and a 63^{rd} bit in amp_tx_3.

As shown in FIG. 3d, the FEC lane 0 and the FEC lane 1 each may further include a 1-bit pad (1-bit Pad), and four AM code blocks in one FEC lane have 256 bits. A size of a data part in an RS-FEC codeword is 5140 bits. Therefore, a quantity of bits in an AM code block may be an integer multiple of 257. A 1-bit pad is added to one FEC lane, so that a quantity of bits in one AM on the FEC lane can be an integer multiple of a 257 bit code block.

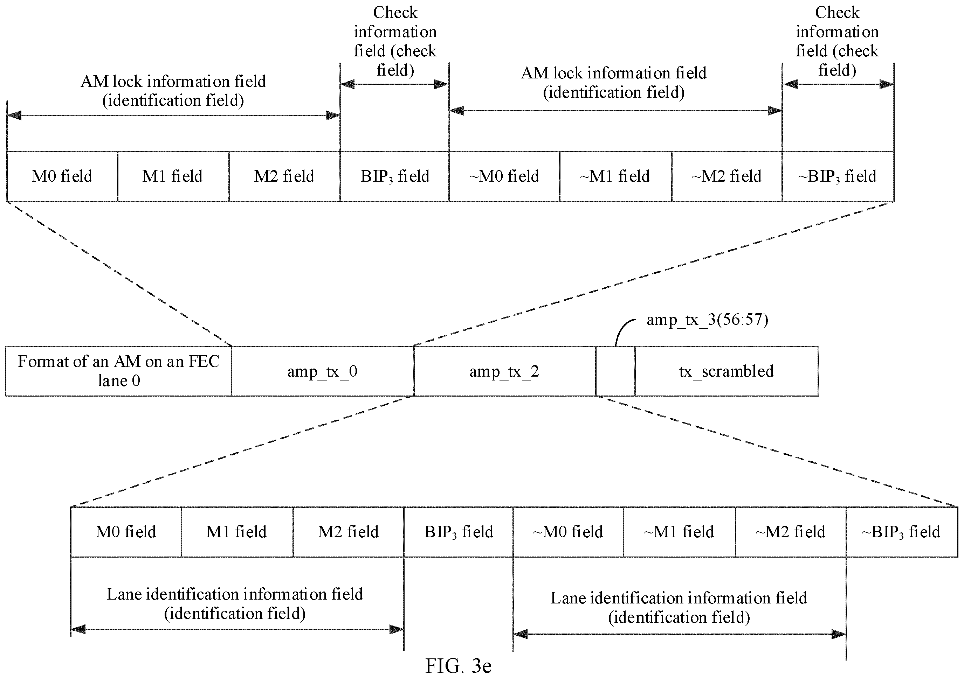

Each of amp tx 0, amp_tx_1, amp_tx_2, and amp_tx_3 in the four FEC lanes may be an AM code block. For a structure of the AM code block, refer to the AM code block shown in FIG. 3a. FIG. 3e is a schematic diagram of an example of correspondences between AM code blocks and amp_tx_1 and amp_tx_0 in the AM on the FEC lane 0. The following describes the AM with reference to FIG. 3d and FIG. 3e.

Refer to FIG. 3d and FIG. 3e. A lock information field in the AM on the FEC lane 0 may include an identification field in amp_tx_0. A lock information field in the AM on the FEC lane 1 may include an identification field in amp_tx_1. For the two FEC lanes, information carried in the identification fields in amp tx 0 and amp_tx_1 is the same, and may be a preset value, for example, preset AM lock information. For each logical lane, the receiving end may perform AM lock based on information carried in an identification field of a first AM code block in an AM on the logical lane. For a manner of performing AM lock, refer to the foregoing related descriptions corresponding to 100 Gbps, and details are not described herein again.

Refer to FIG. 3d and FIG. 3e. A lane identification information field in the AM on the FEC lane 0 may include an identification field in amp_tx_2. A lane identification information field in the AM on the FEC lane 1 may include an identification field in amp_tx_3.

Lane identification information corresponding to any two logical lanes is different. For example, a value of at least one bit in lane identification information (information carried in all identification fields in amp_tx_2) corresponding to the FEC lane 0 is different from that of lane identification information (information carried in all identification fields in amp_tx_3) corresponding to the FEC lane 1.

Refer to FIG. 3d and FIG. 3e. For the FEC lane 0, a check information field in the AM may include a check field in at least one AM code block included in the AM. In FIG. 3e, an example in which the check information field in the AM may include a check field in amp tx 0 is used for presentation.

### (6.4) Format of the AM on the FEC lane with the transmission rate of 25 Gbps

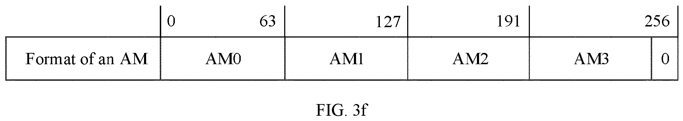

FIG. 3f shows an example of a format of an AM on a logical lane with a transmission rate of 25 Gbps. As shown in FIG. 3f, N may be 1, that is, only one logical lane is included, and the logical lane may be referred to as an FEC lane. One AM on the logical lane includes AM0, AM1, AM2, and AM3.

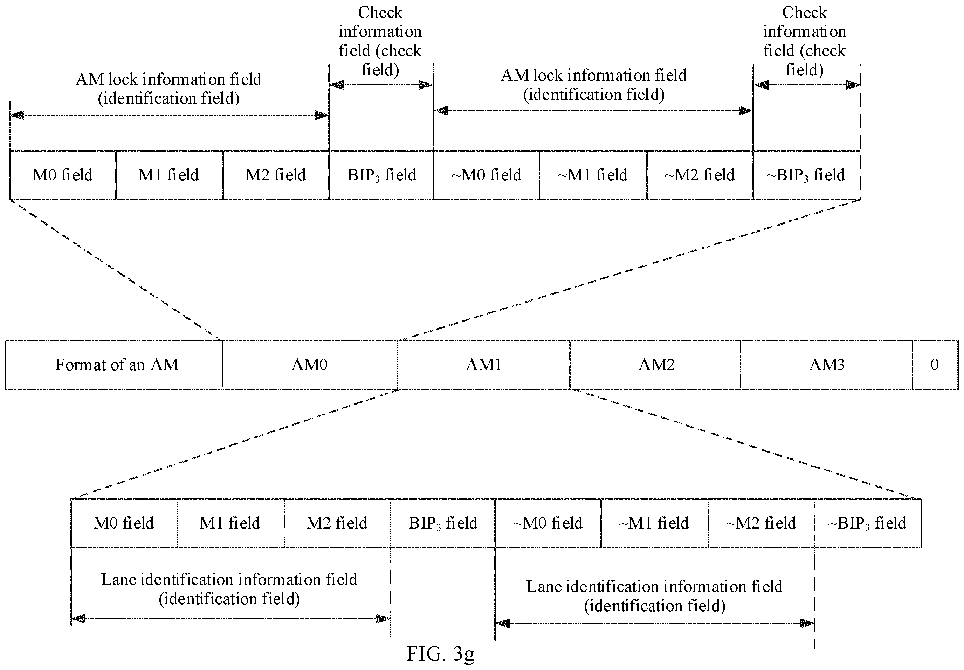

Each of AM0, AM1, AM2, and AM3 may be an AM code block. For a structure of the AM code block, refer to the AM code block shown in FIG. 3a. FIG. 3g is a schematic diagram of an example of correspondences between AM code blocks and AM1 and AM0 in the AM. The following describes the AM with reference to FIG. 3f and FIG. 3g.

Refer to FIG. 3f and FIG. 3g. A lock information field in the AM may include an identification field in AM0. Information carried in the identification field in the AM0 may be a preset value, for example, preset AM lock information. For the logical lane, the receiving end may perform AM lock based on information carried in an identification field of a first AM code block (AM0) in the AM on the logical lane. For a manner of performing AM lock, refer to the foregoing related descriptions corresponding to 100 Gbps, and details are not described herein again.

Refer to FIG. 3f and FIG. 3g. A lane identification information field in the AM may include an identification field in at least one of AM1, AM2, and AM3. In FIG. 3g, an example in which the lane identification information field includes the identification field in AM1 is used for presentation.

Refer to FIG. 3f and FIG. 3g. A check information field in the AM may include a check field in at least one AM code block included in the AM. In FIG. 3g, an example in which the check information field in the AM may include a check field in AM0 is used for presentation.

### (7) Encryption parameter

In embodiments of this application, encryption parameter information may be deployed in one or more AMs. It may also be understood that the encryption parameter information may be carried in one AM included in one AM periodicity, or may be carried in a plurality of AMs included in a plurality of AM periodicities.

In a possible implementation method, the encryption parameter may be used to encrypt a data segment in an AM periodicity in which the encryption parameter is located. In another possible implementation method, the encryption parameter may be used to encrypt a data segment in another AM periodicity (an AM periodicity other than the AM periodicity in which the encryption parameter is located).

The encryption parameter in embodiments of this application may include a key identification and an initialization vector identification. The key identification indicates an encryption key for encrypting the data segment. The initialization vector IV identification indicates an initialization vector for encrypting the data segment.

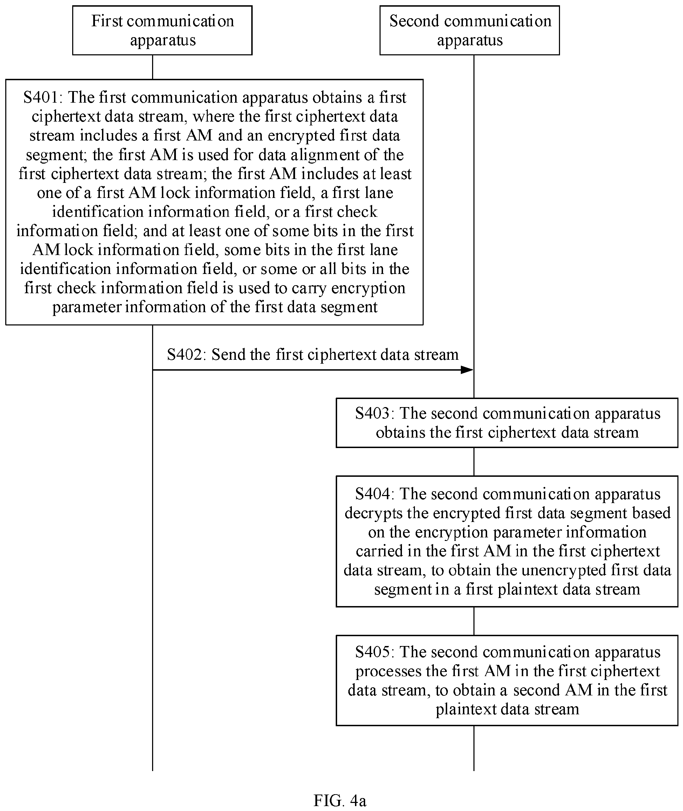

Based on the foregoing content, FIG. 4a is a schematic flowchart of an example of a data transmission method according to an embodiment of this application. The method may be performed by a first communication apparatus and a second communication apparatus, or modules or chips in the first communication apparatus and the second communication apparatus. For related descriptions of the first communication apparatus and the second communication apparatus, refer to the foregoing content. Details are not described herein again. As shown in FIG. 4a, the method includes the following steps.

S401: The first communication apparatus obtains a first ciphertext data stream.

The first ciphertext data stream includes a first alignment marker AM and an encrypted first data segment, and the first AM is used for data alignment of the first ciphertext data stream. The first AM includes at least one of a first AM lock information field, a first lane identification information field, or a first check information field. At least one of some bits in the first AM lock information field, some bits in the first lane identification information field, or some or all bits in the first check information field is used to carry encryption parameter information of the first data segment.

S402: The first communication apparatus sends the first ciphertext data stream to the second communication apparatus.

S403: The second communication apparatus obtains the first ciphertext data stream.

S404: The second communication apparatus decrypts the encrypted first data segment based on the encryption parameter information carried in the first AM in the first ciphertext data stream, to obtain the unencrypted first data segment in a first plaintext data stream.

After S404, the method may further include S405.

S405: The second communication apparatus processes the first AM in the first ciphertext data stream, to obtain a second AM in the first plaintext data stream.

In S401, the first communication apparatus may obtain N ciphertext data streams, where N is a positive integer. Correspondingly, in S402, the first communication apparatus may send the N ciphertext data streams. In S403, the second communication apparatus may obtain the N ciphertext data streams. In S404 and S405, the second communication apparatus may restore the N ciphertext data streams to N plaintext data streams. The first ciphertext data stream is one of the N ciphertext data streams. The first plaintext data stream is one of the N plaintext data streams. The first ciphertext data stream corresponds to the first plaintext data stream. In this embodiment of this application, each of the N ciphertext data streams may be separately encrypted and decrypted, and encryption parameters of any two ciphertext data streams may not be associated. In this embodiment of this application, N may be a positive integer greater than 1. For a method for processing another ciphertext data stream in the N ciphertext data streams, refer to the method for processing the first ciphertext data stream. Details are not described again.

In this application, transmission of the encryption parameter information is performed in bit locations in an existing aligned data unit in the data stream, without additionally adding a bit location for transmission of the encryption parameter information. Therefore, transmission of the encryption parameter information occupies no user service bandwidth.

In addition, because the data stream (or referred to as a bit stream) at a physical layer is encrypted for transmission in this application, all bits (including a source MAC address and a destination MAC address) in an Ethernet frame can be encrypted. This can improve security.

In embodiments of this application, for each logical lane, transmission of an encryption parameter corresponding to the logical lane can be separately performed, that is, an encryption process and a decryption process on the logical lane are not associated. The encryption parameter of a data stream can be separately extracted from the data stream transmitted on the logical lane, and the data stream on the logical lane is decrypted. In addition, because the second communication apparatus processes the first AM to restore the second AM in the first plaintext data stream, the solution in this embodiment of this application can basically have no impact on upper-layer MAC.

In S401, in a possible implementation in which the first communication apparatus obtains N ciphertext data streams, the first communication apparatus may obtain N plaintext data streams, and obtain the N ciphertext data streams based on encryption parameters corresponding to data segments in the N plaintext data streams.

The N plaintext data streams are in a one-to-one correspondence with the N ciphertext data streams. The first plaintext data stream is one of the N plaintext data streams. The first ciphertext data stream is one ciphertext data stream, corresponding to the first plaintext data stream, in the N ciphertext data streams. The first plaintext data stream includes at least two second AMs and at least one unencrypted first data segment. The at least two second AMs are used for data alignment of the N plaintext data streams.

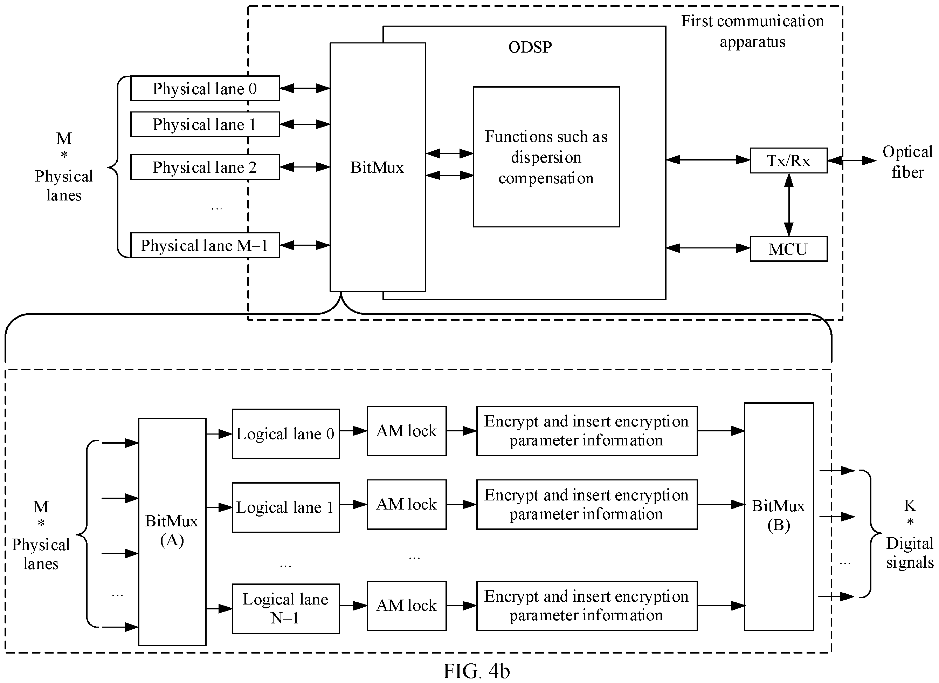

FIG. 4b is a schematic flowchart of an example of another data transmission method according to an embodiment of this application. In FIG. 4b, an example in which a first communication apparatus is an optical module or a module or unit in the optical module is used for presentation.

As shown in FIG. 4b, the first communication apparatus obtains M physical lane signals, and converts, according to a specified ratio such as M:N, the M physical lane signals (for example, a physical lane 0 to a physical lane M-1 in the figure) into N logical lane signals (for example, an FEC lane 0 to an FEC lane (N-1) in the figure) through a BitMux (A) in a BitMux. For each logical lane, the first communication apparatus searches for an AM in the logical lane, and locks the AM in a specified interval (an AM interval may be different for different rates of Ethernet MAC/PHY).

The N logical lane signals include plaintext data, and the N logical lane signals may also be referred to as N plaintext data streams. For one plaintext data stream (for example, a first plaintext data stream) in the N plaintext data streams, an MCU may encrypt an unencrypted first data segment in the first plaintext data stream, to obtain the encrypted first data segment in a first ciphertext data stream. Further, encryption parameter information may be inserted into a second AM in the first plaintext data stream, to obtain a second AM in the first ciphertext data stream. Further, N ciphertext data streams are converted into K digital signals that can be inputted into an ODSP through a BitMux (B) in the BitMux.

It should be noted that, in a possible implementation, the first communication apparatus may aggregate a plurality of ciphertext data streams (including an encrypted data segment, encryption parameter information, and the like) corresponding to a plurality of PCS lanes into one serial code block stream, then perform RS-FEC encode (RS-FEC Encode) on the serial code block stream, to form N encryption signals corresponding to N FEC lanes, and send the N encryption signals to a second communication apparatus. In this way, a receiving end may perform RS-FEC decode on the received signals, so that RS-FEC can be used to correct a bit error generated due to a link. The RS-FEC encode may be understood as RS-FEC encode of an Ethernet architecture. It should be noted that the encryption parameter information in this embodiment of this application may also include an RS-FEC code, and the RS-FEC code is used to correct a bit error that may occur in the encryption parameter information.

In this embodiment of this application, the MCU may configure and update encryption parameter information required by an encryption module. The encryption parameter information includes a key encryption parameter, for example, an initialization vector IV and a key identification. Optionally, corresponding function modules such as an AM lock module and an encryption/decryption module may be deployed in the BitMux of the first communication apparatus. Specifically, an AM lock module and an encryption/decryption module may be separately deployed for each logic lane. For one plaintext data stream corresponding to each logic lane, the AM lock module may be configured to insert encryption parameter information into an AM in the plaintext data stream, and the encryption/decryption module may be configured to encrypt (Encryption) the plaintext data stream based on an encryption parameter, to obtain a ciphertext data stream. Specifically, the MCU may configure the IV when being started for the first time, and subsequently, the encryption/decryption module automatically updates the IV according to a specified rule. The MCU configures and modifies the key identification. The AM lock module may be responsible for locking an AM on a logic lane and using the locked AM to carry a latest encryption parameter.

In this embodiment of this application, the second AM in the first plaintext data stream may be processed to obtain the first AM in the first ciphertext data stream. Specifically, the first communication apparatus may include encryption parameter information of at least one first data segment in at least one of some bits in a second AM lock information field, some bits in a second lane identification information field, or some or all bits in a second check information field in the second AM, to obtain the first AM in the first ciphertext data stream. It may also be understood that three fields in the second AM may be used to carry the encryption parameter information. The following separately describes the three fields.

### (1) Second AM lock information field and first AM lock information field

In this embodiment of this application, the second AM in the first plaintext data stream and the first AM in the first ciphertext data stream are used as an example for description. The first AM is obtained by processing the second AM (for example, the encryption parameter information is added to the second AM). In other words, the first AM corresponds to the second AM.

When the first AM lock information field in the first AM carries no encryption parameter information, information carried in the second AM lock information field may be the same as information carried in the first AM lock information field.

When the first AM lock information field in the first AM carries a part or all of the encryption parameter information, in a possible implementation, information carried in the first AM lock information field is obtained by replacing information carried in some bits in the second AM lock information field with the part or all of the encryption parameter information.

For a structure form of the second AM in this embodiment of this application, refer to the related descriptions in FIG. 3a to FIG. 3g. Descriptions are provided below by using examples in FIG. 3b and FIG. 3c. For example, the first plaintext data stream is the data stream corresponding to the FEC lane 0 in FIG. 3b, and the structure form of the second AM is shown in FIG. 3c.

As shown in FIG. 3c, the second AM lock information field may be the AM lock information field in FIG. 3c, and is specifically the identification field in amp_tx_0. The second AM lock information field is used to carry AM lock information of the first plaintext data stream.

The first AM lock information field in the first AM obtained by processing the second AM may also be the AM lock information field in FIG. 3c, and may be specifically the identification field in amp_tx_0. Bit locations in the first AM lock information field that are used to carry the encryption parameter information are some of bit locations of the following fields: an M0 field, an M1 field, an M2 field, a ~M0 field, a ~M1 field, and a -M2 field.

As shown in FIG. 3c, the first AM lock information field may include the identification field in amp_tx_0. An identification field in amp_tx_16 is used for AM lock in a low power consumption scenario. In this embodiment of this application, the first AM lock information field may not include the identification field in amp_tx_16. Similarly, the first AM lock information field at a transmission rate of 50 Gbps may include only the identification field in amp_tx_0 (refer to FIG. 3e).

In this embodiment of this application, bits in the second AM lock information field that are originally used to carry the AM lock information may be used to carry the encryption parameter information. For example, the first communication apparatus may use eight bits from the first AM lock information field to carry the encryption parameter information. Further, the receiving end can perform AM lock in cooperation with a matching rule provided in this application, so that AM lock performance is not affected as much as possible.

In a possible implementation, the bit locations in the first AM lock information field that are used to carry the encryption parameter information are one of the following content:
bit locations of first four bits of the M0 field and first four bits of the ~M0 field,
bit locations of first four bits of the M1 field and first four bits of the ~M1 field, or
bit locations of first four bits of the M2 field and first four bits of the -M2 field.

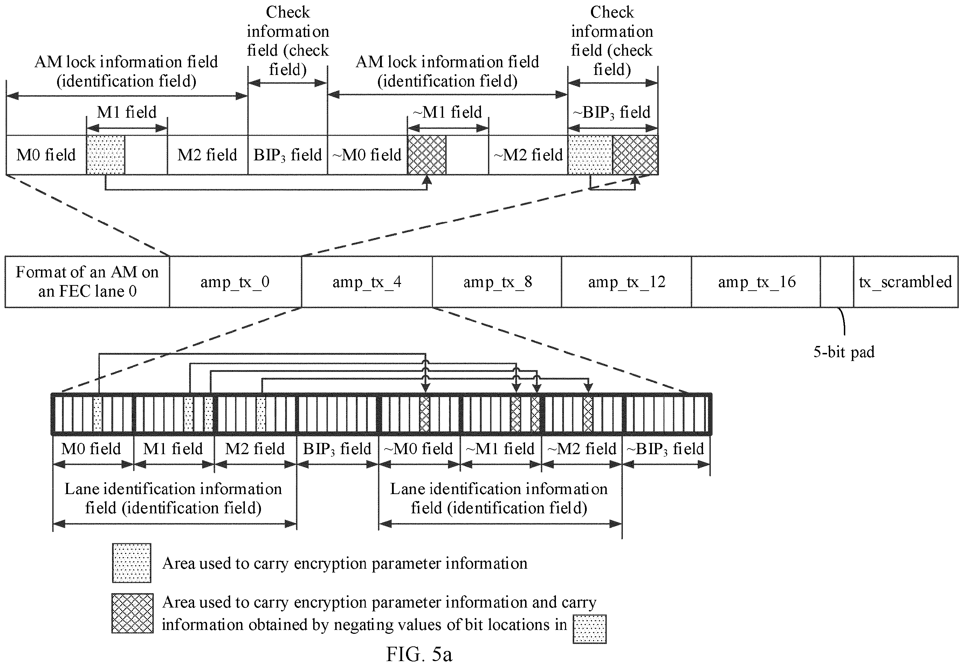

FIG. 5a is a schematic diagram of an example of the bit locations, in the AM in FIG. 3c, that may be used to carry the encryption parameter information. As shown in FIG. 5a, the bit locations in the first AM lock information field that are used to carry the encryption parameter information are bit locations of the first four bits of the M1 field and the first four bits of the ~M1 field.

In another possible implementation, to ensure 0/1 balance, for the first AMs of the at least two first AMs that carry the part or all of the encryption parameter information of the at least one first data segment, information that is carried in the first AM and that belongs to the encryption parameter information is divided into two parts: a first part of information and a second part of information, and the second part of information is information obtained by negating a bit value corresponding to the first part of information.

There are a plurality of possible distribution manners of the first part of information and the second part of information. In a possible implementation, the first communication apparatus may include a part of original encryption parameter information and information obtained by negating the original encryption parameter information in each of the first AM lock information field, a first lane identification information field, and a first check information field. For example, information that is carried in the first AM lock information field and that belongs to the encryption parameter information is divided into two parts: a third part of information and a fourth part of information, and the fourth part of information is information obtained by negating a bit value corresponding to the third part of information.

As shown in FIG. 5a, the first four bits of the M1 field may be used to carry four bits of information in the original encryption parameter information, and the first four bits of the ~M1 field may carry values obtained by negating values of the first four bits of the M1 field. For example, if a value of a 0^{th} bit in the first four bits of the M1 field is 0, a value of a 0^{th} bit in the first four bits of the ~M1 field is 1. For another example, if a value of a 0^{th} bit in the first four bits of the M1 field is 1, a value of a 0^{th} bit in the first four bits of the ~M1 field is 0.

FIG. 5a is only an example. Specifically, there are a plurality of possible implementations for placing the original encryption parameter information and the information obtained by negating the original encryption parameter information. For example, a part of the original encryption parameter information may be carried in the first four bits of the M1 field and the first four bits of the ~M1 field, and then values obtained by negating all bit values of the first four bits of the M1 field and the first four bits of the ~M1 field are carried in the ~BIP₃ field. For another example, the first four bits of the ~M1 field may carry the original encryption parameter information, and the first four bits of the M1 field carry values obtained by negating values of the first four bits of the ~M1 field.

In another aspect, in the foregoing S405, in a process in which the second communication apparatus processes the second AM, if some bits in the first AM lock information field carry the encryption parameter information, the second communication apparatus may restore, in S405, values of bit locations in the first AM lock information field that carry the encryption parameter information to second preset values. The second preset values are values carried in corresponding bit locations (for example, the first four bits of the M1 field and the first four bits of ~M1 field) in the second AM lock information field in the second AM corresponding to the first AM. The second preset values may also be understood as original values specified in a protocol. It can be learned that in this embodiment of this application, content of the first AM lock information field can be restored to the original value without identifying a logical lane identification of the first ciphertext data stream.

### (2) Second check information field and first check information field

The second check information field is used to carry check information of the first plaintext data stream. When the first check information field in the first AM carries no encryption parameter information, information carried in the second check information field may be the same as information carried in the first check information field.

When the first check information field in the first AM carries a part or all of the encryption parameter information, in a possible implementation, information carried in the first check information field is obtained by replacing information carried in some bits in the second check information field with the part or all of the encryption parameter information.

Descriptions are provided below by using the examples in FIG. 3b and FIG. 3c. For example, the first plaintext data stream is the data stream corresponding to the FEC lane 0 in FIG. 3b, and the structure form of the second AM is shown in FIG. 3c.

As shown in FIG. 3c, the second check information field may be the check information field in FIG. 3c, and may be specifically the check field in amp_tx_0, or may include a check field in another AM code block. For ease of standardization, in this embodiment of this application, an example in which the second check information field is the check field in the first AM code block in the AM is used for presentation.

The first check information field in the first AM obtained by processing the second AM may also be a check information field in FIG. 5a, and may be specifically a check field in amp_tx_0. Bit locations in the first check information field that are used to carry the encryption parameter information are some or all of bit locations of the following fields: a BIP₃ field or a ~BIP₃ field. For example, the bit locations in the first check information field that are used to carry the encryption parameter information may include bit locations of first four bits of the ~BIP₃ field and last four bits of the ~BIP₃ field.

In another possible implementation, to ensure 0/1 balance, information that is carried in the first check information field and that belongs to the encryption parameter information is divided into two parts: a seventh part of information and an eighth part of information, and the eighth part of information is information obtained by negating a bit value corresponding to the seventh part of information.

As shown in FIG. 5a, the first four bits of the ~BIP₃ field may be used to carry four bits of information in the original encryption parameter information, and the last four bits of the ~BIP₃ field may carry values obtained by negating values of the first four bits of the M1 field. For example, if a value of a 0^{th} bit in the first four bits of the ~BIP₃ field is 0, a value of a 0^{th} bit in the last four bits of the ~BIP₃ field may be 1. For another example, if a value of a 0^{th} bit in the first four bits of the ~BIP₃ field is 1, a value of a 0^{th} bit in the last four bits of the ~BIP₃ field may be 0. FIG. 5a is merely an example. Specifically, there are a plurality of possible implementations for placing the original encryption parameter information and the information obtained by negating the original encryption parameter information.

In another aspect, in the foregoing S405, in a process in which the second communication apparatus processes the second AM, if the first check information field carries the encryption parameter information, the second communication apparatus may restore, in S405, values of bit locations in the first check information field that carry the encryption parameter information. For example, based on first check information (for example, information carried in a BIP₃ field is referred to as the first check information) carried in the first check information field, information on bit locations (eight bit locations of the ~BIP₃ field) in the first check information field that are used to carry the encryption parameter information is restored to information obtained by negating bit values corresponding to the first check information (bit values of the eight bit locations of the BIP₃ field). It can be learned that in this embodiment of this application, content of the first check information field can be restored to the original value without identifying a logical lane identification of the first ciphertext data stream. In another aspect, it can be learned that a restoring error of the ~BIP₃ field is caused only when a bit error also occurs in the BIP₃ field, and then error correction performance of an RS-FEC code in an Ethernet architecture is affected. However, a probability that the bit error occurs in the BIP₃ field is low. Therefore, in this embodiment of this application, the ~BIP₃ field is used to carry the encryption parameter information, and error correction performance of the RS-FEC code in the Ethernet architecture is small.

### (3) Second lane identification information field and first lane identification information field

When the first lane identification information field in the first AM carries no encryption parameter information, that is, all bits in the first lane identification information field are used to carry lane identification information of the first ciphertext data stream, information carried in the second lane identification information field is the same as information carried in the first lane identification information field.

When the first lane identification information field in the first AM carries a part or all of the encryption parameter information, in a possible implementation, information carried in the first lane identification information field is obtained by replacing information carried in some bits in the second lane identification information field with the part or all of the encryption parameter information.

Descriptions are provided below by using the examples in FIG. 3b and FIG. 3c. For example, the first plaintext data stream is the data stream corresponding to the FEC lane 0 in FIG. 3b, and the structure form of the second AM is shown in FIG. 3c.

As shown in FIG. 3c, the second lane identification information field may be the lane identification information field in FIG. 3c, and may be specifically the identification field in amp_tx_4. The second lane identification information field is used to carry lane identification information of the first plaintext data stream.

The first lane identification information field in the first AM obtained by processing the second AM may also be a lane identification information field in FIG. 5a, and may be specifically an identification field in amp_tx_4. Bit locations in the first lane identification information field that are used to carry the encryption parameter information are some of bit locations of the following fields: an M0 field, an M1 field, an M2 field, a ~M0 field, a ~M1 field, and a ~M2 field. As shown in FIG. 3c, the first lane identification information field may include the identification field in amp_tx_4.

In this embodiment of this application, bit locations in the first lane identification information field that are used to carry the encryption parameter information are some or all bit locations of k1 bit locations in the first lane identification information field. The k1 bits are used to carry k1 preset values. k1 is a positive integer. The preset value is a fixed value. In this way, the receiving end can restore, according to a related regulation, values of the k1 bits for carrying the encryption parameter information to the preset values. This reduces impact on a process of identifying lane identification information.

Further, when the first communication apparatus includes a plurality of logical lanes, a lane identification information field in an AM on each logical lane includes the k1 preset values. That is, although lane identification information carried in lane identification information fields corresponding to any two logical lanes is different, the two lane identification information fields each include the k1 preset values. For example, the N plaintext data streams further include a second plaintext data stream, and the second plaintext data stream includes at least two third AMs. A third AM in the at least two third AMs includes a third lane identification information field that carries lane identification information of the second plaintext data stream, and the third lane identification information field includes k1 bit locations that carry the k1 first preset values.

In a possible implementation, for one of the k1 preset values, an order of a bit location carrying the preset value in all bit locations in the third lane identification information field is the same as an order of a bit location carrying the preset value in all bit locations in the second lane identification information field. That is, locations of k1 bit locations that are in the lane identification information fields corresponding to the two logical lanes and that are used to carry the k1 first preset values are the same.

To be more compatible with a standard protocol, in a possible implementation, bit locations in the first lane identification information field that are used to carry the encryption parameter information are some or all of the following bit locations in an AM code block corresponding to the first lane identification information field:
a 4^{th} bit location, a 13^{th} bit location, a 15^{th} bit location, a 20^{th} bit location, a 36^{th} bit location, a 45^{th} bit location, a 47^{th} bit location, and a 52^{nd} bit location.

The eight bit locations in the AM code block may also be referred to as the k1 bit locations. It should be noted that the foregoing code block order is named on the premise that a first bit location in the AM code block is referred to as a 0^{th} bit location.

FIG. 5a is the schematic diagram of the example of the bit locations, in the AM in FIG. 3c, that may be used to carry the encryption parameter information. As shown in FIG. 5a, the bit locations in the first lane identification information field that are used to carry the encryption parameter information are a 4^{th} bit location (located in the M0 field), a 13^{th} bit location (located in the M1 field), a 15^{th} bit location (located in the M1 field), a 20^{th} bit location (located in the M2 field), a 36^{th} bit location (located in the ~M0 field), a 45^{th} bit location (located in the ~M1 field), a 47^{th} bit location (located in the ~M1 field), and a 52^{nd} bit location (located in the ~M2 field) in the AM code block amp_tx_4.

For Ethernet with a transmission rate of 100 Gbps, amp_tx_4, amp_tx_5, amp_tx_6, and amp_tx_7 have eight common bits (k1 bit locations), and values of these common bits (the k1 bit locations) are 10000111. For Ethernet with a transmission rate of 50 Gbps, amp_tx_2 and amp_tx_3 also have eight common bits (k1 bit locations), and values of these common bits (the k1 bit locations) are 01011010. For Ethernet with a transmission rate of 25 Gbps, k1 preset values carried by k1 bit locations in an AM are 10100101. The receiving end may restore, based on the k1 preset values, the values of the k1 bit locations in the lane identification information field in the first AM to the k1 preset values. This can avoid impact on another data processing process of the receiving end, like an RS-FEC code error correction process in an Ethernet architecture.

In another possible implementation, to ensure 0/1 balance, information that is carried in the first lane identification information field and that belongs to the encryption parameter information is divided into two parts: a fifth part of information and a sixth part of information, and the sixth part of information is information obtained by negating a bit value corresponding to the fifth part of information.

As shown in FIG. 5a, the 4^{th} bit location (located in the M0 field) in the AM code block amp_tx_4 may be used to carry 1 -bit information in the original encryption parameter information, and the 36^{th} bit location (located in the ~M0 field) in the AM code block amp_tx_4 may carry a value obtained by negating a value of the 4^{th} bit location.

The 13^{th} bit location (located in the M1 field) in the AM code block amp_tx_4 may be used to carry 1-bit information in the original encryption parameter information, and the 45^{th} bit location (located in the ~M1 field) in the AM code block amp_tx_4 may carry a value obtained by negating a value of the 13^{th} bit location.

The 15^{th} bit location (located in the M1 field) in the AM code block amp_tx_4 may be used to carry 1-bit information in the original encryption parameter information, and the 47^{th} bit location (located in the ~M1 field) in the AM code block amp_tx_4 may carry a value obtained by negating a value of the 15^{th} bit location.

The 20^{th} bit location (located in the M2 field) in the AM code block amp_tx_4 may be used to carry 1-bit information in the original encryption parameter information, and the 52^{nd} bit location (located in the -M2 field) in the AM code block amp_tx_4 may carry a value obtained by negating a value of the 20^{th} bit location.

FIG. 5a is only an example. Specifically, there are a plurality of possible implementations for placing the original encryption parameter information and the information obtained by negating the original encryption parameter information. For example, a part of the original encryption parameter information may be carried in the first four bits of the M1 field and the first four bits of the ~M1 field, and then values obtained by negating all bit values of the first four bits of the M1 field and the first four bits of the ~M1 field are carried in the k1 bits in the first lane identification information field.

In another aspect, in the foregoing S405, in a process in which the second communication apparatus processes the second AM, if some bits in the first lane identification information field carry the encryption parameter information, the second communication apparatus may restore, in S405, values of bit locations in the first lane identification information field that carry the encryption parameter information to first preset values. The first preset values are values carried by k1 bit locations in the second lane identification information field in the second AM corresponding to the first AM. The first preset values may also be understood as original values specified in a protocol. It can be learned that in this embodiment of this application, content of the first lane identification information field can be restored to the original value without identifying a logical lane identification of the first ciphertext data stream.

It should be noted that the foregoing content describes, by using a transmission rate of 100 Gbps as an example, distribution of the bit locations in the AM that are used to carry the encryption parameter information. For distribution of bit locations in an AM at another transmission rate that are used to carry the encryption parameter information, refer to FIG. 5a. For example, bit locations in an AM on an FEC lane 0 at a transmission rate of 50 Gbps that are used to carry the encryption parameter information may be distributed on AM code blocks corresponding to amp_tx_0 and amp_tx_2 (refer to FIG. 3e). For a structure form of amp_tx_0 in the AM in a ciphertext data stream on the FEC lane 0 at the transmission rate of 50 Gbps, refer to a structure form of amp_tx_0 in FIG. 5a. For a structure form of amp_tx_2, refer to a structure form of amp_tx_4 in FIG. 5a. Details are not described herein again. For another example, bit locations in an AM at a transmission rate of 25 Gbps that are used to carry the encryption parameter information may be distributed on AM code blocks corresponding to AM0 and AM1 (refer to FIG. 3g). For a structure form of AM0 in the AM in a ciphertext data stream on a logical lane at the transmission rate of 25 Gbps, refer to a structure form of amp_tx_0 in FIG. 5a. For a structure form of AM1, refer to a structure form of amp_tx_4 in FIG. 5a. Details are not described herein again.

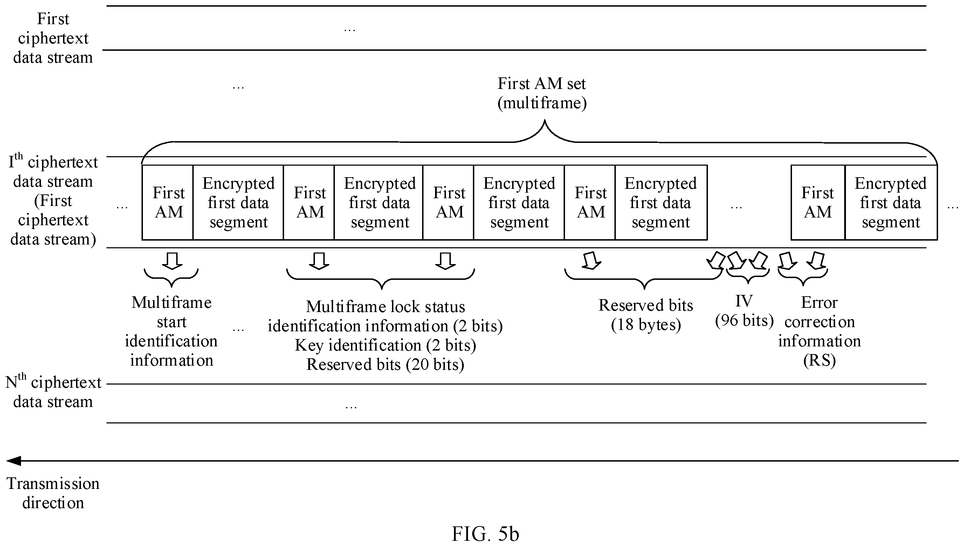

FIG. 5b is a schematic diagram of an example of a structure of a multiframe of encryption parameter information carried in a first ciphertext data stream according to an embodiment of this application. As shown in FIG. 5b, the first ciphertext data stream includes a plurality of first AM sets. For one first AM set, the first AM set may include L first AMs, and L is a positive integer. In the example shown in FIG. 5b, 24 bits in each first AM may be used to carry the encryption parameter information, 12 bits may be used to carry the original encryption parameter information, and remaining 12 bits are used to carry values obtained by negating bit values of the original encryption parameter information carried in the first AM. Based on this, the 12 bits of the encryption parameter information may be placed in one first AM.

As shown in FIG. 5b, the multiframe may include a third item and a fifth item of the following content. In a possible implementation, the multiframe may further include one or more of other items (items other than the third item and the fifth item) of the following content.

### (1) Multiframe start identification information, the multiframe start identification information indicates a start bit of the multiframe that carries the encryption parameter information.

For example, values of two bits may be set to "10" to indicate that the multiframe starts, and if the bits are repeated for six times, 12 bits are occupied. The remaining 12 bits in the first AM may be values obtained by negating the values of the occupied 12 bits. For example, the first four bits of M1 in the first AM that are used to carry the multiframe start identification information are set to "1010" in binary mode, the first four bits of ~BIP₃ are set to "1010", the first four bits of ~M1 in the first AM are set to "0101" in binary mode, and last four bits of ~BIP₃ are set to "0101". The first four bit locations in the k1 bit locations in the first lane identification information field in the first AM are "1010", and last four bit locations are "0101".

### (2) Multiframe lock status identification information, the multiframe lock status identification information indicates whether a multiframe of the transmitting end and/or the receiving end is locked. For example, if start identification information of two consecutive multiframes matches a predefined mode (namely, "10"), it indicates that the multiframe is locked. If start identification information of three consecutive multiframes does not match the predefined mode (namely, "10"), it indicates that the multiframe is unlocked.

The first communication apparatus may select a next first AM of a first AM that carries the multiframe start identification information, and use two bits in the first AM to indicate multiframe lock status corresponding to the transmitting end and/or receiving end. For example, 01 indicates that a local multiframe is unlocked; 11 indicates that a local multiframe is locked and a remote multiframe waits for being lock; and 10 indicates that a local multiframe is locked and a remote multiframe is locked.

### (3) Key identification

The first communication apparatus may select a next first AM of a first AM that carries the multiframe start identification information, and use two bits valued as "10" and "01" in the first AM to indicate the key identification. If the key identification is changed from "10" to "01", or from "01" to "10", it may indicate that a new encryption key is used in a next multiframe periodicity.

### (4) Reserved bits

To be compatible with a future technology, a specific quantity of reserved bits may be reserved to carry other information.

### (5) Initialization vector identification

In this embodiment, a length of an IV is 12 bytes, and the IV occupies 8 first AMs in 8(12*8/12=8) AM periodicities.

In this embodiment of this application, there may be a plurality of encryption algorithms for first data. For example, an advanced encryption standard Galois/counter mode (Advanced Encryption Standard Galois/Counter Mode, AES-GCM) may be selected.

### (6) Error correction information of the encryption parameter information

The error correction information of the encryption parameter information may be an RS-FEC code. The RS-FEC code can better cope with a burst bit error, and can effectively resist impact of a link bit error on transmission reliability of an encryption parameter. For example, the error correction information of the encryption parameter information may be an RS-FEC code (RS-FEC (57, 33, 12, 2^8)), and is defined on a finite field GF (2^8). One symbol is 8 bits, and a length of the data symbol is 33. A codeword with a length of 57 symbols is formed by adding 24 check symbols, and the codeword may correct any 12 symbols in the codeword. In a random channel model, for a 2.4e-04 bit error rate, an error probability of the codeword is very low, and error time meets a reliability requirement of the age of the universe. Therefore, error correction is performed on information in the multiframe of the encryption parameter information by using the RS-FEC code. This can ensure reliability of the age of the universe, and effectively resist impact of the link bit error on transmission reliability of the encryption parameter.

The error correction information of the encryption parameter information may also be a BCH code, and the BCH code is obtained from abbreviations of Bose, Ray-Chaudhuri, and Hocquenghem. The BCH code can better cope with random bit errors and effectively resist impact of the link bit error on transmission reliability of the encryption parameter.

In a possible implementation, after S403 and before S404, the second communication apparatus may obtain the error correction information of the encryption parameter information in the first ciphertext data stream; and perform error correction on other information in the encryption parameter information based on the error correction information of the encryption parameter information. This can effectively resist impact of a link bit error on transmission reliability of the encryption parameter.

In this embodiment of this application, encryption and decryption are implemented at the physical layer, and a MAC/PHY internal mechanism such as AM alignment lock RS-FEC decode of the Ethernet architecture, scramble, transcode, and FCS check can resist tampering. Therefore, no integrity protection needs to be considered. The encryption parameter information in this embodiment of this application may not include an integrity check value ICV, so that a delay and power consumption overheads caused by ICV calculation can be reduced.

It should be noted that encryption parameter information carried in the first AM set may be information about an encryption parameter in a first data segment included in the first AM set, or may be information about an encryption parameter in a first data segment included in another first AM set, for example, the encryption parameter information carried in the first AM set is information about an encryption parameter in a first data segment included in a next first AM set.

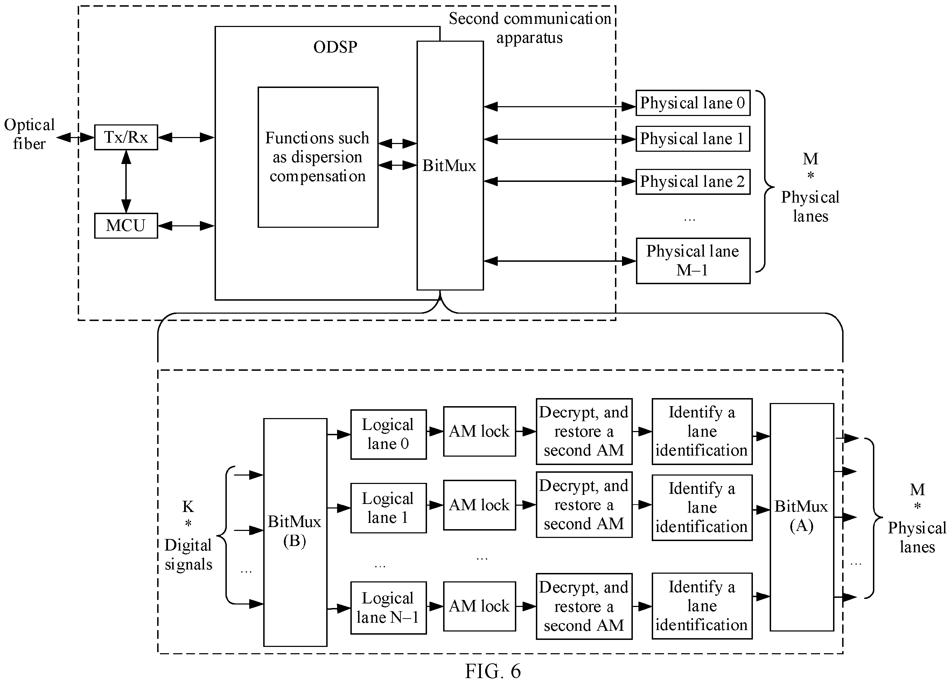

FIG. 6 is a schematic flowchart of an example of still another data transmission method according to an embodiment of this application. In FIG. 4b, an example in which a second communication apparatus is an optical module or a module or unit in the optical module is used for presentation. A decryption solution in this embodiment of this application may be specifically deployed in a BitMux of the optical module, and an MCU may control decryption of data in a conversion process of a plurality of logic lane signals in the BitMux.

As shown in FIG. 6, an ODSP converts optical signals received by the second communication apparatus into K digital signals, and a BitMux (B) in the BitMux may convert the K digital signals into N ciphertext data streams. Then, the second communication apparatus may separately perform AM search for the N ciphertext data streams, and may perform AM lock within specified intervals (different rates of Ethernet MAC/PHY correspond to different AM intervals). In addition, data segments in the ciphertext data streams are decrypted, and values of bit locations that are in second AMs in the ciphertext data streams and that carry encryption parameter information are restored (for example, restored to second AMs in plaintext data streams), to obtain N plaintext data streams. Then, lane identification information of each of the N plaintext data streams is identified based on the second AMs in the N plaintext data streams.

For example, an AM lock module deployed in the BitMux may be configured to lock the N ciphertext data streams, and an encryption/decryption module deployed in the BitMux may be configured to decrypt (decryption) the N ciphertext data streams, to obtain the N plaintext data streams. The N plaintext data streams are also referred to as N logical lane signals (for example, an FEC lane 0 to an FEC lane (N-1) in the figure). ABitMux (A) in the BitMux may restore the N logical lane signals to M physical lane signals (for example, a physical lane 0 to a physical lane M-1 in the figure) according to a specified ratio of M:N. Then, the optical module transmits the M physical lane signals to an electrical chip at a physical layer.

It should be noted that, in a possible implementation, after restoring the N encrypted signals from the received signals, the second communication apparatus may separately perform decryption on the N ciphertext data streams on a plurality of logical lanes and restore the first AMs (restore the first AMs to the second AMs), to obtain the plaintext data streams on N FEC lanes. Signals on the N FEC lanes are aggregated into one serial signal stream, and then RS-FEC decode (RS-FEC Decode) is performed on the serial signal stream. In this way, a receiving end may perform RS-FEC decode on the received signals, so that RS-FEC can be used to correct a bit error generated due to a link. It should be noted that RS-FEC decode may be understood as RS-FEC decode in an Ethernet architecture. It should be noted that the encryption parameter information in this embodiment of this application may also include an RS-FEC code, and the RS-FEC code is used to correct a bit error that may occur in the encryption parameter information.

After S403 and before S404, the second communication apparatus may further perform AM lock on the first ciphertext data stream. In a possible implementation, when determining that at least k2 consecutive first AMs in the first ciphertext data stream meet a preset rule, the second communication apparatus determines to complete AM lock on the first ciphertext data stream based on the at least k2 first AMs, where k2 is an integer greater than 1. For example, a value of k2 may be 2.

The preset rule met by a first AM in the at least k2 first AMs includes: when information carried by some bits in the first AM lock information field in the first AM includes a part or all of the encryption parameter information, there are a maximum of k3 unmatched nibbles (nibbles) between preset AM lock information and information other than the encryption parameter information in information carried in the first AM lock information field.

A value of k3 may be less than 3. In a possible implementation, the value of k3 is inversely related to a quantity of bit locations in the first AM lock information field that are used to carry the encryption parameter information. For example, when the quantity of bit locations in the first AM lock information field that are used to carry the encryption parameter information is 8, the value of k3 is 1.

In this embodiment of this application, the preset AM lock information may be information, in the AM, that is used to perform AM lock and that is specified in a protocol, for example, information carried in an AM lock information field in a first AM code block corresponding to each logical lane of the FEC lane 0 to the FEC lane 3 shown in FIG. 3b.

The first AM lock information field in the first plaintext data stream includes 48 bits, and may be divided into 12 nibbles (half bytes). A matching rule is as follows: When a quantity of unmatched nibbles (nibbles) between the preset AM lock information and the 12 nibbles (nibbles) is less than or equal to 3, it is considered that the AM matches. In this embodiment of this application, some bits in the second AM lock information field are used to carry the encryption parameter information, for example, eight bits are used to carry the encryption parameter information, and remaining 40 bits are used to carry the AM lock information. Therefore, this embodiment of this application provides an AM matching rule, that is, when there is a maximum of one unmatched nibble (nibble) between the preset AM lock information and information other than the encryption parameter information in information carried in the first AM lock information field, it is considered that the AM matches. If two consecutive AMs match, it is considered that AM lock is completed.

For example, at the transmission rate of 100 Gbps, if the first four bits of the M1 field and the first four bits of the ~M1 field in the first AM lock information field carry the encryption parameter information, the second communication apparatus may compare bits (40 bits) other than the encryption parameter information in information carried in the first AM lock information field in the first AM with 40 bits at corresponding locations in the four AMs on the four logical lanes in FIG. 3b, and when determining that the 40 bits other than the encryption parameter information in the information carried in the first AM lock information field match an AM on a logical lane in FIG. 3b, for example, are totally consistent with 40 bits corresponding to the FEC lane 0 (eight bits of the M0 field, last four bits of the M1 field, eight bits of the M2 field, eight bits of the ~M0 field, last four bits of the ~M1 field, and eight bits of the -M2 field corresponding to the FEC lane 0, 40 bits in total) (or there is a maximum of one unmatched nibble), determines that the AM meets the preset rule. If k2 consecutive AMs meet the preset rule, AM lock is completed.

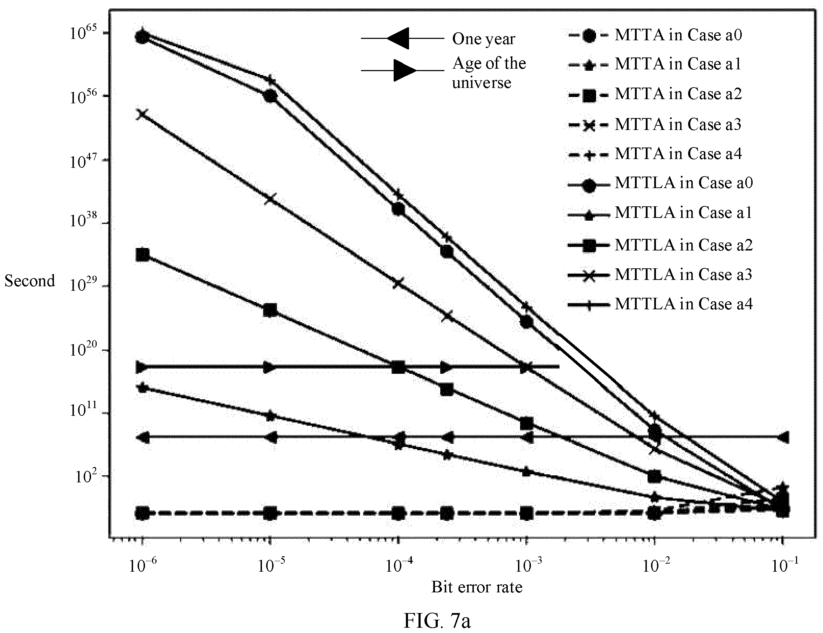

The following further describes this embodiment of this application by using a simulation result. FIG. 7a is a schematic diagram of an example of mean time to loss alignment (mean time to loss alignment, MTTLA) and mean time to alignment (mean time to alignment, MTTA) in five cases. The five cases are respectively as follows:
Case a0: All the 48 bits of the first AM lock information field are used to carry the lock information. An AM matching rule is as follows: When a quantity of unmatched nibbles (nibbles) between the first AM lock information field and the preset AM lock information is determined to be not greater than 3, it is determined that the first AM matches.
Case a1: 40 bits of the first AM lock information field are used to carry the AM lock information, and the remaining 8 bits are used to carry the encryption parameter information. An AM matching rule is as follows: When the 40 bits of the AM lock information in the first AM lock information field is determined to totally match the preset AM lock information, it is determined that the first AM matches.
Case a2: 40 bits of the first AM lock information field are used to carry the AM lock information, and the remaining 8 bits are used to carry the encryption parameter information. An AM matching rule is as follows: When a quantity of unmatched nibbles (nibbles) between the 40 bits of the AM lock information in the first AM lock information field and the preset AM lock information is determined to be not greater than 1, it is determined that the first AM matches.
Case a3: 40 bits of the first AM lock information field are used to carry the AM lock information, and the remaining 8 bits are used to carry the encryption parameter information. An AM matching rule is as follows: When a quantity of unmatched nibbles (nibbles) between the 40 bits of the AM lock information in the first AM lock information field and the preset AM lock information is determined to be not greater than 2, it is determined that the first AM matches.
Case a4: 40 bits of the first AM lock information field are used to carry the AM lock information, and the remaining 8 bits are used to carry the encryption parameter information. An AM matching rule is as follows: When a quantity of unmatched nibbles (nibbles) between the 40 bits of the AM lock information in the first AM lock information field and the preset AM lock information is determined to be not greater than 3, it is determined that the first AM matches.

As shown in FIG. 7a, when a bit error rate is 2×10⁻⁴, it can be seen that time to loss alignment meets a requirement of the age of the universe in Case a2, Case a3, Case a4, and Case a0. However, Case a1 does not meet the requirement. Time to alignment in the five cases is almost the same.

The following Table 1 is an example of a false alignment performance evaluation table. It can be seen from Table 1 that Case a1 and Case a2 meet the requirement. Based on this, in this embodiment of this application, the AM matching rule in Case a2 may be selected, so that the time to alignment, the time to loss alignment, and a mismatching probability in Case a2 are equivalent to that in a standard matching manner.

**Table 1 False alignment performance evaluation table**

| | Probability of false alignment (Probability of False Alignment) | Time (Unit: year) |
|---|---|---|
| Case a0 | 1.02E-17 | 1.38E+06 |
| Case a1 | 8.27E-25 | 1.71E+13 |
| Case a2 | 2.12E-20 | 6.67E+08 |
| Case a3 | 1.10E-16 | 1.29E+05 |
| Case a4 | 2.00E-13 | 7.07E+01 |

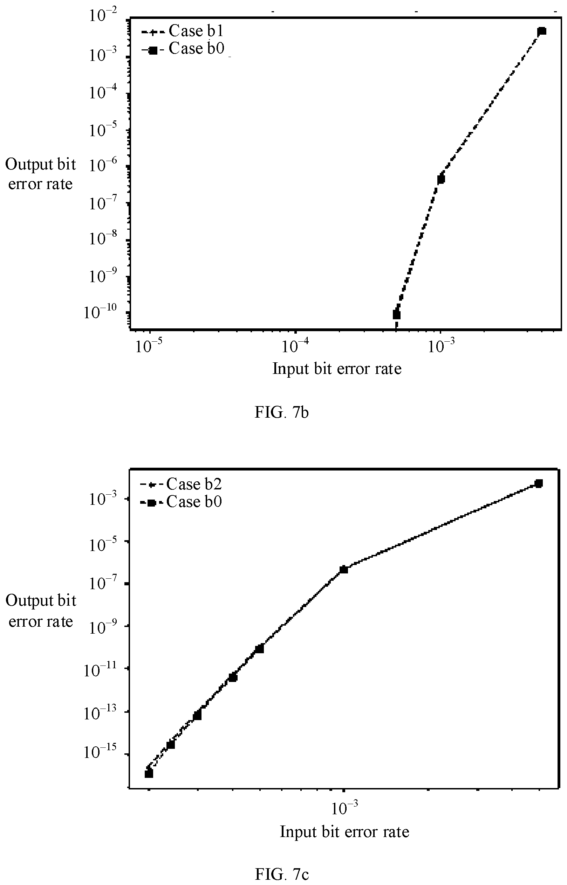

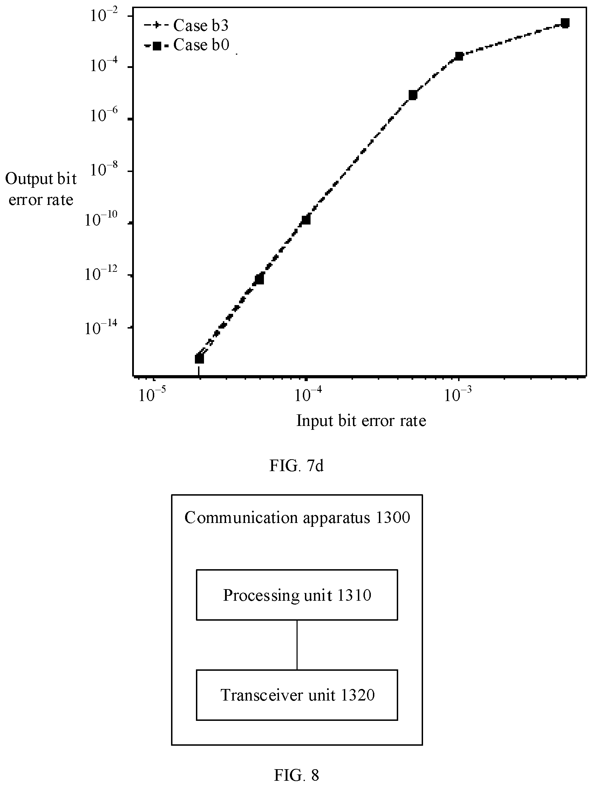

FIG. 7b is an effect display diagram of an example of bit error rates after error correction of an RS-FEC code in an Ethernet architecture (at the transmission rate of 25 Gbps) in Case b0 and Case b1. It can be seen from FIG. 7b that the bit error rates after error correction in Case b0 and Case b1 are equivalent. FIG. 7c is an effect display diagram of an example of bit error rates after error correction of an RS-FEC code in an Ethernet architecture (at the transmission rate of 50 Gbps) in Case b0 and Case b2. It can be seen from FIG. 7c that the bit error rates after error correction in Case b0 and Case b2 are equivalent. FIG. 7d is an effect display diagram of an example of bit error rates after error correction of an RS-FEC code in an Ethernet architecture (at the transmission rate of 100 Gbps) in Case b0 and Case b3. It can be seen from FIG. 7d that the bit error rates after error correction in Case b0 and Case b3 are equivalent. It can be seen from FIG. 7b to FIG. 7d that, in this solution, because the AM field used to carry the encryption parameter is restored, impact on error correction performance of the RS-FEC code in the Ethernet architecture is extremely small. It should be noted that, at the transmission rate of 25 Gbps in FIG. 7b, simulation is performed by using an example in which the RS-FEC code in the Ethernet architecture is RS-FEC (528, 514), and at the transmission rate of 50 Gbps in FIG. 7c and at the transmission rate of 100 Gbps in FIG. 7d, simulation is performed by using an example in which the RS-FEC code in the Ethernet architecture is RS-FEC (544, 514).

It can be understood that, to implement functions in the foregoing embodiments, the communication apparatus includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

FIG. 8, FIG. 9 and FIG. 10 each are a schematic diagram of a possible structure of a communication apparatus according to an embodiment of this application. The communication apparatuses may be configured to implement the functions of the first communication apparatus in the foregoing method embodiments, and therefore can also implement beneficial effect of the foregoing method embodiments. These communication apparatuses may alternatively be configured to implement the functions of the second communication apparatus in the foregoing method embodiments, and therefore can also implement beneficial effect of the foregoing method embodiments. In this embodiment of this application, the communication apparatus may be the transmitting end device or the first communication apparatus in FIG. 2a, FIG. 2b, FIG. 2c, FIG. 2d, and FIG. 2e-1and FIG. 2e-2, or may be a module (for example, a chip) used in the transmitting end device or the first communication apparatus. In this embodiment of this application, the communication apparatus may be the receiving end device or the second communication apparatus in FIG. 2a, FIG. 2b, FIG. 2c, FIG. 2d, and FIG. 2e-1 and FIG. 2e-2, or may be a module (for example, a chip) used in the receiving end device or the second communication apparatus.

As shown in FIG. 8, the communication apparatus 1300 includes a processing unit 1310 and a transceiver unit 1320. The communication apparatus 1300 is configured to implement the functions of the first communication apparatus in the method embodiment shown in FIG. 4a.

When the communication apparatus 1300 is configured to implement the functions of the first communication apparatus in the method embodiment shown in FIG. 4a, the processing unit 1310 is configured to: obtain a first ciphertext data stream, and send the first ciphertext data stream by using the transceiver unit 1320. The first ciphertext data stream includes a first alignment marker AM and an encrypted first data segment, and the first AM is used for data alignment of the first ciphertext data stream. The first AM includes at least one of a first AM lock information field, a first lane identification information field, or a first check information field. At least one of some bits in the first AM lock information field, some bits in the first lane identification information field, or some or all bits in the first check information field is used to carry encryption parameter information of the first data segment.

When the communication apparatus 1300 is configured to implement the functions of the first communication apparatus in the method embodiment shown in FIG. 4a, the processing unit 1310 is further configured to obtain N plaintext data streams by using the transceiver unit 1320, where the N plaintext data streams include a first plaintext data stream and a second plaintext data stream, the second plaintext data stream includes a third AM, the third AM includes a third lane identification information field that carries lane identification information of the second plaintext data stream, and the third lane identification information field includes k1 bit locations that carry first preset values.

As shown in FIG. 8, the communication apparatus 1300 includes a processing unit 1310 and a transceiver unit 1320. The communication apparatus 1300 is configured to implement the functions of the second communication apparatus in the method embodiment shown in FIG. 4a.

When the communication apparatus 1300 is configured to implement the functions of the second communication apparatus in the method embodiment shown in FIG. 4a, the processing unit 1310 is configured to obtain a first ciphertext data stream by using the transceiver unit 1320. The first ciphertext data stream includes a first alignment marker AM and an encrypted first data segment. The first AM is used for data alignment of the first ciphertext data stream, and the first AM includes at least one of a first AM lock information field, a first lane identification information field, or a first check information field. At least one of some bits in the first AM lock information field, some bits in the first lane identification information field, or some or all bits in the first check information field is used to carry encryption parameter information of the first data segment. The communication apparatus decrypts the encrypted first data segment based on the encryption parameter information carried in the first AM in the first ciphertext data stream, to obtain a first plaintext data stream.

When the communication apparatus 1300 is configured to implement the functions of the second communication apparatus in the method embodiment shown in FIG. 4a, the processing unit 1310 is further configured to: determine, by using the transceiver unit 1320, that at least k2 consecutive first AMs in the first ciphertext data stream meet a preset rule, and complete AM lock on the first ciphertext data stream based on the at least k2 first AMs, where k2 is an integer greater than 1. For the preset rule, refer to related content in the foregoing method embodiment. Details are not described herein again.

When the communication apparatus 1300 is configured to implement the functions of the second communication apparatus in the method embodiment shown in FIG. 4a, the processing unit 1310 is specifically configured to: decrypt, by using the transceiver unit 1320, the encrypted first data segment based on the encryption parameter information carried in the first AM in the first ciphertext data stream, to obtain the unencrypted first data segment in the first plaintext data stream; and process the first AM, to obtain the second AM in the first plaintext data stream.

When the communication apparatus 1300 is configured to implement the functions of the second communication apparatus in the method embodiment shown in FIG. 4a, the processing unit 1310 is specifically configured to determine lane identification information of a first plaintext data stream based on a second AM by using the transceiver unit 1320.

When the communication apparatus 1300 is configured to implement the functions of the second communication apparatus in the method embodiment shown in FIG. 4a, the processing unit 1310 is specifically configured to perform at least one of the following content by using the transceiver unit 1320:
restoring information on bit locations in a first lane identification information field that are used to carry encryption parameter information to first preset values;
restoring information on bit locations in a first AM lock information field that are used to carry encryption parameter information to second preset values; or
restoring, based on first check information carried in a first check information field, information on bit locations in the first check information field that are used to carry encryption parameter information to information obtained by negating bit values corresponding to the first check information.

When the communication apparatus 1300 is configured to implement the functions of the second communication apparatus in the method embodiment shown in FIG. 4a, the processing unit 1310 is specifically configured to perform the following steps by using the transceiver unit 1320: obtaining N ciphertext data streams, where the N ciphertext data streams include a first ciphertext data stream and a second ciphertext data stream, the second ciphertext data stream includes a fourth AM and an encrypted second data segment, the fourth AM is used for data alignment of the second ciphertext data stream, and the fourth AM carries encryption parameter information of the second data segment; decrypting the second data segment in the second ciphertext data stream based on the encryption parameter information carried in the fourth AM in the second ciphertext data stream, to obtain the unencrypted second data segment in a second plaintext data stream; and processing the fourth AM, to obtain a third AM in the second plaintext data stream, where the third AM includes a third lane identification information field that carries lane identification information of the second plaintext data stream, and the third lane identification information field includes k1 bit locations that carry the first preset values.

When the communication apparatus 1300 is configured to implement the functions of the second communication apparatus in the method embodiment shown in FIG. 4a, the processing unit 1310 is further configured to perform the following steps by using the transceiver unit 1320: obtaining error correction information of the encryption parameter information in the first ciphertext data stream; and performing error correction on other information in the encryption parameter information based on the error correction information of the encryption parameter information.

For more detailed descriptions of the processing unit 1310 and the transceiver unit 1320, directly refer to the related descriptions in the method embodiment shown in FIG. 4a. Details are not described herein.

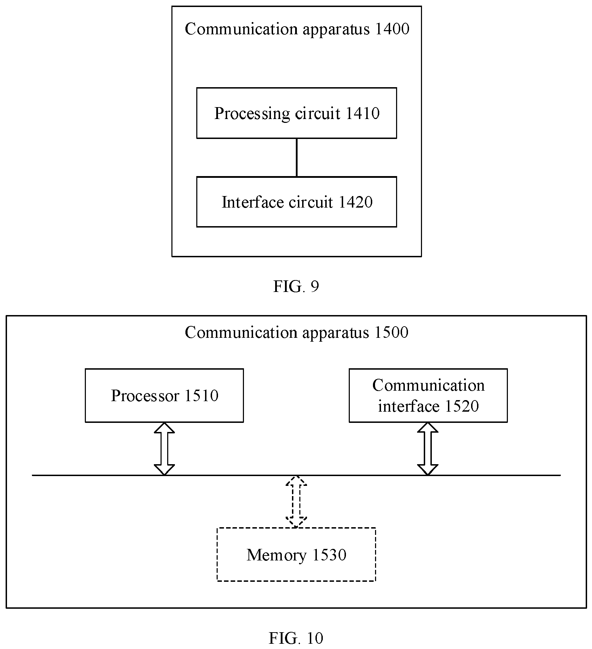

As shown in FIG. 9, the communication apparatus 1400 includes a processing circuit 1410 and an interface circuit 1420. The processing circuit 1410 and the interface circuit 1420 are coupled to each other. It can be understood that the interface circuit 1420 may be a transceiver or an input/output interface. Optionally, the communication apparatus 1400 may further include a memory, configured to store instructions executed by the processing circuit, or store input data required by the processing circuit 1410 to run instructions, or store data generated after the processing circuit 1410 runs instructions.

When the communication apparatus 1400 is configured to implement the method shown in FIG. 4a, the processing circuit 1410 is configured to implement the functions of the processing unit 1310, and the interface circuit 1420 is configured to implement the functions of the transceiver unit 1320.

As shown in FIG. 10, the communication apparatus 1500 includes a processor 1510 and a communication interface 1520. The processor 1510 and the communication interface 1520 are coupled to each other. It may be understood that the communication interface 1520 may be a transceiver or an input/ output interface. Optionally, the communication apparatus 1500 may further include a memory 1530, configured to store instructions executed by the processor 1510, or store input data required by the processor 1510 to run instructions, or store data generated after the processor 1510 runs instructions.

When the communication apparatus 1500 is configured to implement the method shown in FIG. 4a, the processor 1510 is configured to implement the functions of the processing unit 1310, and the communication interface 1520 is configured to implement the functions of the transceiver unit 1320.

When the communication apparatus 1500 is configured to implement the functions of the first communication apparatus in the method embodiment shown in FIG. 4a, the processor 1510 is configured to perform the following step by using the communication interface 1520: obtaining a first ciphertext data stream, and sending the first ciphertext data stream. The first ciphertext data stream includes a first alignment marker AM and an encrypted first data segment, and the first AM is used for data alignment of the first ciphertext data stream. The first AM includes at least one of a first AM lock information field, a first lane identification information field, or a first check information field. At least one of some bits in the first AM lock information field, some bits in the first lane identification information field, or some or all bits in the first check information field is used to carry encryption parameter information of the first data segment.

When the communication apparatus 1500 is configured to implement the functions of the second communication apparatus in the method embodiment shown in FIG. 4a, the processor 1510 is configured to perform the following steps by using the communication interface 1520: obtaining a first ciphertext data stream, where the first ciphertext data stream includes a first alignment marker AM and an encrypted first data segment, the first AM is used for data alignment of the first ciphertext data stream, and the first AM includes at least one of a first AM lock information field, a first lane identification information field, or a first check information field, and at least one of some bits in the first AM lock information field, some bits in the first lane identification information field, or some or all bits in the first check information field is used to carry encryption parameter information of the first data segment; and decrypting the encrypted first data segment based on the encryption parameter information carried in the first AM in the first ciphertext data stream, to obtain a first plaintext data stream.

When the communication apparatus is a chip used in the communication apparatus, the chip in the communication apparatus implements the functions of the communication apparatus in the foregoing method embodiments. The chip in the communication apparatus receives information from another module (for example, a radio frequency module or an antenna) in the communication apparatus, where the information is sent by a network device to the communication apparatus; or the chip in the communication apparatus sends information to another module (for example, a radio frequency module or an antenna) in the communication apparatus, where the information is sent by the communication apparatus to a network device.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any regular processor, or the like.

According to the method provided in embodiments of this application, this application further provides a computer program product. The computer program product includes a computer program or instructions. When the computer program or the instructions are run on a computer, the computer is enabled to perform the method in any one of embodiments shown in FIG. 4a.

According to the method provided in embodiments of this application, this application further provides a computer-readable storage medium. The computer-readable medium stores a program or instructions. When the program or the instructions are run on a computer, the computer is enabled to perform the method in any one of embodiments shown in FIG. 4a.

According to the method provided in embodiments of this application, this application further provides a chip system. The chip system may include a processor. The processor is coupled to a memory, and may be configured to perform the method in any one of embodiments shown in FIG. 4a. Optionally, the chip system further includes the memory. The memory is configured to store a computer program (which may also be referred to as code or instructions). The processor is configured to invoke a computer program from the memory and run the computer program, so that a device on which the chip system is installed performs the method in any one of embodiments shown in FIG. 4a.

According to the method provided in embodiments of this application, this application further provides a system, including the foregoing first communication apparatus and the foregoing second communication apparatus.

The method steps in embodiments of this application may be implemented in a hardware manner, or may be implemented in a manner of executing software instructions by the processor. The software instructions may include a corresponding software module. The software module may be stored in a random access memory (Random Access Memory, RAM), a flash (flash) memory, a read-only memory (Read-Only Memory, ROM), a programmable read-only memory, an erasable programmable read-only memory (Erasable Programmable ROM, EPROM), an electrically erasable programmable read-only memory, a register, a hard disk, a solid-state drive (solid-state drive, SSD), a removable hard disk, a portable read-only memory (Compact Disc Read-Only Memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a communication apparatus. Certainly, the processor and the storage medium may exist in the communication apparatus as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

"A plurality of" in this application refers to two or more than two. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A data transmission method, comprising:
obtaining a first ciphertext data stream; and
sending the first ciphertext data stream, wherein
the first ciphertext data stream comprises a first alignment marker AM and an encrypted first data segment, and the first AM is used for data alignment of the first ciphertext data stream;
the first AM comprises at least one of a first AM lock information field, a first lane identification information field, or a first check information field; and
at least one of some bits in the first AM lock information field, some bits in the first lane identification information field, or some or all bits in the first check information field is used to carry encryption parameter information of the first data segment.

2. The method according to claim 1, wherein the first ciphertext data stream is obtained based on a first plaintext data stream and the encryption parameter information, the first plaintext data stream comprises a second AM and the unencrypted first data segment, and the second AM is used for data alignment of the first plaintext data stream.

3. The method according to claim 2, wherein at least one of the following is met:
the first AM lock information field is obtained by replacing some bits in a second AM lock information field in the second AM with a part or all of the encryption parameter information;
the first lane identification information field is obtained by replacing some bits in a second lane identification information field in the second AM with a part or all of the encryption parameter information; or
the first check information field is obtained by replacing some bits in a second check information field in the second AM with a part or all of the encryption parameter information.

4. The method according to claim 3, wherein bit locations in the first lane identification information field that are used to carry the encryption parameter information are some or all bit locations of k1 bit locations in the second lane identification information field that carry first preset values, and k1 is a positive integer.

5. The method according to any one of claims 1 to 4, wherein bit locations in the first lane identification information field that are used to carry the encryption parameter information are some or all of the following bit locations in an AM code block corresponding to the first lane identification information field:
a 4^{th} bit location, a 13^{th} bit location, a 15^{th} bit location, a 20^{th} bit location, a 36^{th} bit location, a 45^{th} bit location, a 47^{th} bit location, and a 52^{nd} bit location.

6. The method according to any one of claims 1 to 5, wherein bit locations in the first AM lock information field that are used to carry the encryption parameter information are some of bit locations of the following fields:
an M0 field, an M1 field, an M2 field, a ~M0 field, a ~M1 field, and a ~M2 field.

7. The method according to any one of claims 1 to 6, wherein bit locations in the first check information field that are used to carry the encryption parameter information are some or all of bit locations of the following fields:
a BIP₃ field or a ~BIP₃ field.

8. The method according to any one of claims 1 to 7, wherein the encryption parameter information comprises error correction information of the encryption parameter information.

9. A data transmission method, comprising:
obtaining a first ciphertext data stream, wherein the first ciphertext data stream comprises a first alignment marker AM and an encrypted first data segment; the first AM is used for data alignment of the first ciphertext data stream; the first AM comprises at least one of a first AM lock information field, a first lane identification information field, or a first check information field; and at least one of some bits in the first AM lock information field, some bits in the first lane identification information field, or some or all bits in the first check information field is used to carry encryption parameter information of the first data segment; and
decrypting the encrypted first data segment based on the encryption parameter information, to obtain a first plaintext data stream.

10. The method according to claim 9, wherein before the decrypting the encrypted first data segment, the method further comprises:
completing AM lock on the first ciphertext data stream based on at least k2 consecutive first AMs in the first ciphertext data stream, wherein the at least k2 consecutive first AMs meet a preset rule, and k2 is an integer greater than 1; and
the preset rule comprises:
when information carried by some bits in the first AM lock information field in the first AM comprises a part or all of the encryption parameter information, there are a maximum of k3 unmatched nibbles (nibbles) between preset AM lock information and information other than the encryption parameter information in information carried in the first AM lock information field, wherein k3 is a positive integer.

11. The method according to claim 9 or 10, wherein when a quantity of bit locations in the first AM lock information field that are used to carry the encryption parameter information is 8, a value of k3 is 1.

12. The method according to any one of claims 9 to 11, wherein the first ciphertext data stream is obtained based on the first plaintext data stream and the encryption parameter information, the first plaintext data stream comprises a second AM and the unencrypted first data segment, and the second AM is used for data alignment of the first plaintext data stream.

13. The method according to claim 12, wherein the decrypting the encrypted first data segment based on the encryption parameter information, to obtain a first plaintext data stream comprises:
decrypting the encrypted first data segment based on the encryption parameter information carried in the first AM in the first ciphertext data stream, to obtain the unencrypted first data segment in the first plaintext data stream; and
processing the first AM, to obtain the second AM in the first plaintext data stream.

14. The method according to claim 12 or 13, wherein at least one of the following is met:
the first AM lock information field is obtained by replacing some bits in a second AM lock information field in the second AM with the part or all of the encryption parameter information;
the first lane identification information field is obtained by replacing some bits in a second lane identification information field in the second AM with the part or all of the encryption parameter information; or
the first check information field is obtained by replacing some bits in a second check information field in the second AM with the part or all of the encryption parameter information.

15. The method according to claim 14, wherein bit locations in the first lane identification information field that are used to carry the encryption parameter information are some or all bit locations of k1 bit locations in the second lane identification information field that carry k1 first preset values, and k1 is a positive integer.

16. The method according to any one of claims 9 to 15, wherein bit locations in the first lane identification information field that are used to carry the encryption parameter information are some or all of the following bit locations in an AM code block corresponding to the first lane identification information field:
a 4^{th} bit location, a 13^{th} bit location, a 15^{th} bit location, a 20^{th} bit location, a 36^{th} bit location, a 45^{th} bit location, a 47^{th} bit location, and a 52^{nd} bit location.

17. The method according to any one of claims 9 to 16, wherein bit locations in the first AM lock information field that are used to carry the encryption parameter information are some of bit locations of the following fields:
an M0 field, an M1 field, an M2 field, a ~M0 field, a ~M1 field, and a -M2 field.

18. The method according to any one of claims 9 to 17, wherein bit locations in the first check information field that are used to carry the encryption parameter information are some or all of bit locations of the following fields:
a BIP₃ field or a ~BIP₃ field.

19. The method according to any one of claims 9 to 18, wherein the encryption parameter information comprises error correction information of the encryption parameter information.

20. A communication apparatus, comprising a processing unit and a transceiver unit, wherein the processing unit is configured to perform the following steps by using the transceiver unit:
obtaining a first ciphertext data stream; and
sending the first ciphertext data stream, wherein
the first ciphertext data stream comprises a first alignment marker AM and an encrypted first data segment, and the first AM is used for data alignment of the first ciphertext data stream;
the first AM comprises at least one of a first AM lock information field, a first lane identification information field, or a first check information field; and
at least one of some bits in the first AM lock information field, some bits in the first lane identification information field, or some or all bits in the first check information field is used to carry encryption parameter information of the first data segment.

21. The apparatus according to claim 20, wherein the first ciphertext data stream is obtained based on a first plaintext data stream and the encryption parameter information, the first plaintext data stream comprises a second AM and the unencrypted first data segment, and the second AM is used for data alignment of the first plaintext data stream.

22. The apparatus according to claim 21, wherein at least one of the following is met:
the first AM lock information field is obtained by replacing some bits in a second AM lock information field in the second AM with a part or all of the encryption parameter information;
the first lane identification information field is obtained by replacing some bits in a second lane identification information field in the second AM with a part or all of the encryption parameter information; or
the first check information field is obtained by replacing some bits in a second check information field in the second AM with a part or all of the encryption parameter information.

23. The apparatus according to claim 22, wherein bit locations in the first lane identification information field that are used to carry the encryption parameter information are some or all bit locations of k1 bit locations in the second lane identification information field that carry first preset values, and k1 is a positive integer.

24. The apparatus according to any one of claims 20 to 23, wherein bit locations in the first lane identification information field that are used to carry the encryption parameter information are some or all of the following bit locations in an AM code block corresponding to the first lane identification information field:
a 4^{th} bit location, a 13^{th} bit location, a 15^{th} bit location, a 20^{th} bit location, a 36^{th} bit location, a 45^{th} bit location, a 47^{th} bit location, and a 52^{nd} bit location.

25. The apparatus according to any one of claims 20 to 24, wherein bit locations in the first AM lock information field that are used to carry the encryption parameter information are some of bit locations of the following fields:
an M0 field, an M1 field, an M2 field, a ~M0 field, a ~M1 field, and a -M2 field.

26. The apparatus according to any one of claims 20 to 25, wherein bit locations in the first check information field that are used to carry the encryption parameter information are some or all of bit locations of the following fields:
a BIP₃ field or a ~BIP₃ field.

27. The apparatus according to any one of claims 20 to 26, wherein the encryption parameter information comprises error correction information of the encryption parameter information.

28. A communication apparatus, comprising a processing unit and a transceiver unit, wherein the processing unit is configured to perform the following steps by using the transceiver unit:
obtaining a first ciphertext data stream, wherein the first ciphertext data stream comprises a first alignment marker AM and an encrypted first data segment; the first AM is used for data alignment of the first ciphertext data stream; the first AM comprises at least one of a first AM lock information field, a first lane identification information field, or a first check information field; and at least one of some bits in the first AM lock information field, some bits in the first lane identification information field, or some or all bits in the first check information field is used to carry encryption parameter information of the first data segment; and
decrypting the encrypted first data segment based on the encryption parameter information, to obtain a first plaintext data stream.

29. The apparatus according to claim 28, wherein the processing unit is further configured to perform the following step by using the transceiver unit:
completing AM lock on the first ciphertext data stream based on at least k2 consecutive first AMs in the first ciphertext data stream, wherein the at least k2 consecutive first AMs meet a preset rule, and k2 is an integer greater than 1; and
the preset rule comprises:
when information carried by some bits in the first AM lock information field in the first AM comprises a part or all of the encryption parameter information, there are a maximum of k3 unmatched nibbles (nibbles) between preset AM lock information and information other than the encryption parameter information in information carried in the first AM lock information field, wherein k3 is a positive integer.

30. The apparatus according to claim 28 or 29, wherein when a quantity of bit locations in the first AM lock information field that are used to carry the encryption parameter information is 8, a value of k3 is 1.

31. The apparatus according to claims 28 to 30, wherein the first ciphertext data stream is obtained based on the first plaintext data stream and the encryption parameter information, the first plaintext data stream comprises a second AM and the unencrypted first data segment, and the second AM is used for data alignment of the first plaintext data stream.

32. The apparatus according to claim 31, wherein the processing unit is specifically configured to perform the following steps by using the transceiver unit:
decrypting the encrypted first data segment based on the encryption parameter information carried in the first AM in the first ciphertext data stream, to obtain the unencrypted first data segment in the first plaintext data stream; and
processing the first AM, to obtain the second AM in the first plaintext data stream.

33. The apparatus according to claim 31 or 32, wherein at least one of the following is met:
the first AM lock information field is obtained by replacing some bits in a second AM lock information field in the second AM with the part or all of the encryption parameter information;
the first lane identification information field is obtained by replacing some bits in a second lane identification information field in the second AM with the part or all of the encryption parameter information; or
the first check information field is obtained by replacing some bits in a second check information field in the second AM with the part or all of the encryption parameter information.

34. The apparatus according to claim 33, wherein bit locations in the first lane identification information field that are used to carry the encryption parameter information are some or all bit locations of k1 bit locations in the second lane identification information field that carry k1 first preset values, and k1 is a positive integer.

35. The apparatus according to any one of claims 28 to 34, wherein bit locations in the first lane identification information field that are used to carry the encryption parameter information are some or all of the following bit locations in an AM code block corresponding to the first lane identification information field:
a 4^{th} bit location, a 13^{th} bit location, a 15^{th} bit location, a 20^{th} bit location, a 36^{th} bit location, a 45^{th} bit location, a 47^{th} bit location, and a 52^{nd} bit location.

36. The apparatus according to any one of claims 28 to 35, wherein bit locations in the first AM lock information field that are used to carry the encryption parameter information are some of bit locations of the following fields:
an M0 field, an M1 field, an M2 field, a ~M0 field, a ~M1 field, and a -M2 field.

37. The apparatus according to any one of claims 28 to 36, wherein bit locations in the first check information field that are used to carry the encryption parameter information are some or all of bit locations of the following fields:
a BIP₃ field or a ~BIP₃ field.

38. The apparatus according to any one of claims 28 to 37, wherein the encryption parameter information comprises error correction information of the encryption parameter information.

39. A communication apparatus, wherein the apparatus comprises a processor coupled to a memory;
the memory is configured to store a computer program or instructions; and
the processor is configured to execute the computer program or instructions in the memory, so that the method according to any one of claims 1 to 8 is performed, or the method according to any one of claims 9 to 19 is performed.

40. A computer-readable storage medium, wherein the computer-readable storage medium stores computer-executable instructions, and when the computer-executable instructions are invoked by a computer, the method according to any one of claims 1 to 8 is performed; or the method according to any one of claims 9 to 19 is performed.

41. A chip system, comprising:
a communication interface, configured to input and/or output signaling or data; and
a processor, configured to execute a computer-executable program, so that a device on which the chip system is installed performs the method according to any one of claims 1 to 8, or performs the method according to any one of claims 9 to 19.
